(19) Europäisches Patentamt
European Patent Office
Office européen des brevets

(11) **EP 4 664 166 A1**

(12) **EUROPEAN PATENT APPLICATION**
published in accordance with Art. 153(4) EPC

(43) Date of publication:
**17.12.2025 Bulletin 2025/51**

(21) Application number: **24753045.4**

(22) Date of filing: **11.01.2024**

(51) International Patent Classification (IPC):
***G02B 6/02*** *(2006.01)*     ***G02B 6/44*** *(2006.01)*

(52) Cooperative Patent Classification (CPC):
**G02B 6/02; G02B 6/44**

(86) International application number:
**PCT/JP2024/000504**

(87) International publication number:
**WO 2024/166598 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2023 JP 2023017438**

(71) Applicant: **Sumitomo Electric Industries, Ltd.
Osaka-shi, Osaka 541-0041 (JP)**

(72) Inventor: **HAYASHI Tetsuya
Osaka-shi, Osaka 541-0041 (JP)**

(74) Representative: **TBK
Bavariaring 4-6
80336 München (DE)**

(54) **MULTICORE OPTICAL FIBER AND MULTICORE OPTICAL FIBER CABLE**

(57) An MCF (100) according to the present disclosure comprises 12 or 16 core units each including a core (110) and a depressed layer (122), a common cladding (120), and a resin coating (130). On the cross section, the core units are disposed such that an adjacency relationship is not established between cores (110) each establishing an adjacency relationship with a specific core (110), and are disposed such that the centers of the core units are line-symmetric with respect to a symmetry axis (LA) that is an axis crossing a central axis (AX) and not passing the center of any of the core units. The outer diameter of the resin coating (130) is $250\pm15$ $\mu$m, an effective cross-sectional area (Aeff_1550) at a wavelength of 1.550 $\mu$m is 70 $\mu$m$^2$ or more, and the cut-off wavelength ($\lambda$cc) of a cable with a length of 22 m is 1.530 $\mu$m or less. The center-to-center distance (A) of adjacent cores, the shortest distance (d_coat) from a core center to an interface between the common cladding and the resin coating (130), and the smallest outer diameter (CD) of the common cladding (120) satisfy a specific relationship.

**Fig.5**

EP 4 664 166 A1

**Description**

TECHNICAL FIELD

The present disclosure relates to a multi-core optical fiber (hereinafter referred to as "MCF") and a multi-core optical fiber cable. This application claims priority from Japanese Patent Application No. 2023-017438 filed on February 8, 2023, the content of which is relied upon and incorporated herein by reference in its entirety.

BACKGROUND ART

Non-patent literature 1 discloses two types of MCFs having different core arrangements on a fiber cross section. The first MCF is a 12-core MCF including a common cladding having an outer diameter of 147 $\mu$m and 12 cores arranged in a square lattice shape on a fiber cross section. The second MCF is a 12-core MCF including a common cladding having an outer diameter of 145 $\mu$m and 12 cores arranged in a hexagonal lattice shape on the fiber cross section. No trench layer is provided in any of the 12-core MCFs. In addition, these 12-core MCFs have mode field diameters (hereinafter, referred to as "MCF") of 5.4 $\mu$m at a wavelength of 1.310 $\mu$m and 6.1 $\mu$m at a wavelength of 1.550 $\mu$m, a cutoff wavelength of 1.26 $\mu$m, a zero dispersion wavelength of 1.41 $\mu$m, a cladding-to-coating leakage loss of 0.01 dB/km at a wavelength of 1.565 $\mu$m, and an inter-core crosstalk (hereinafter, crosstalk is referred to as "XT") of -30 dB/km at a wavelength of 1.565 $\mu$m.

Patent literature 1 discloses a 12-core MCF and a 16-core MCF having a coating outer diameter of about 250 $\mu$m as MCFs suitable for short-distance communication of about 10km using a wavelength band of 1.260 $\mu$m to 1.360 $\mu$m.

Further, in the seventh embodiment of Patent literature 2, the 12-core MCF in which 12 cores are arranged in a square lattice shape on a fiber cross section is disclosed as an MCF capable of reducing XT and leakage loss at a wavelength of 1.550 $\mu$m. The seventh embodiment qualitatively discloses that the center-to-center distance between adjacent cores is preferably 30 $\mu$m or more, 35 $\mu$m or more, or 40 $\mu$m or more from the viewpoint of XT reduction. However, except for the numerical values shown in the fourth embodiment, Patent literature 2 does not describe at all what specific value of XT is desirable, and what value of XT can be realized. As specific numerical values of the MCF shown in the fourth embodiment, a relative refractive index difference of a core is 0.23%, a relative refractive index difference of a trench layer is -0.65%, a thickness of an inner cladding is 6 $\mu$m, a thickness of the trench layer is 4.3 $\mu$m, an effective cross-sectional area is 118.2 $\mu$m$^2$ to 125.2 $\mu$m$^2$, a cutoff wavelength is 1.28 $\mu$m to 1.39 $\mu$m, and a center-to-center distance between adjacent cores is 40.5 $\mu$m. In addition, the fourth embodiment discloses that, under the conditions of a wavelength of 1.550 $\mu$m and a fiber length of 3.96 km, the inter-core XT of -38.6 dB to -41.6 dB, that is, $1.75 \times 10^{-5}$/km to $3.49 \times 10^{-5}$/km at a wavelength of 1.55 $\mu$m can be realized.

CITATION LIST

PATENT LITERATURE

Patent literature 1: Japanese Unexamined Patent Application Publication No. 2022-41625
Patent literature 2: Japanese Unexamined Patent Application Publication No. 2015-163972
Patent literature 3: Japanese Unexamined Patent Application Publication No. 2017-509171

NON PATENT LITERATURE

Non-patent literature 1: Yusuke Sasaki, et al., "High Density Multicore Fibers Employing Small MFD Cores for Datacenters", OECC2018, Technical Digest, P2-07, July 02-06, 2018, Jeju, Korea.
Non-patent literature 2: R. J. Black and C. Pask, J. Opt. Soc. Am. A, JOSAA 1(11), 1129-1131 (1984).
Non-patent literature 3: Y. Kobayashi and T. Hayashi, "Behavior and measurement method of inter-core crosstalk in multicore fibers with core-dependent loss," Opt. Express 31 (1), pp. 502-508 (2023).

SUMMARY OF INVENTION

A multi-core optical fiber of the present disclosure includes 12 or 16 core units each including a core and a depressed layer, a common cladding, and a resin coating. On a cross section, the core units are arranged such that no adjacent relationship is established between cores each having an adjacent relationship with a specific core, and are each arranged such that centers of the core units are line symmetric with respect to an axis as a symmetry axis that intersects with the central axis and that passes through none of the centers of the core units. The resin coating has an outer diameter of $250 \pm 15\,\mu$m, an effective cross-sectional area at a wavelength of $1.550\,\mu$m is $70\,\mu\text{m}^2$ or more, a cable cutoff wavelength at a length of 22 m is $1.530\,\mu$m or less, or $1.460\,\mu$m or less, A center-to-center distance between adjacent cores, a shortest distance from a core center to a cladding interface, and a cladding diameter satisfy a specific relationship.

BRIEF DESCRIPTION OF THE DRAWINGS

[FIG. 1] FIG. 1 is a diagram showing various structures of an MCF cable of the present disclosure, the MCF cable including an MCF of the present disclosure.
[FIG. 2] FIG. 2 is a diagram for explaining various conditions for determining a core arrangement in the MCF of the present disclosure.
[FIG. 3] FIG. 3 is a diagram showing a core arrangement in first and second embodiments of the MCF of the present disclosure.
[FIG. 4] FIG. 4 is a diagram showing a core arrangement in third and fourth embodiments of the MCF of the present disclosure.
[FIG. 5] FIG. 5 is a diagram showing a core arrangement of a fifth embodiment of the MCF of the present disclosure.
[FIG. 6] FIG. 6 is a diagram for explaining main terms used in the present specification.
[FIG. 7] FIG. 7 is a diagram showing a refractive index profile around each core applicable to the MCF of the present disclosure.
[FIG. 8] FIG. 8 is a table showing specifications of samples of the MCF of the present disclosure and samples of a comparative example.

DETAILED DESCRIPTION

[Problems to be Solved by Present Disclosure]

The inventor has found the following problems as a result of examining the above-described conventional technique.
That is, when the MCF of Non-patent literature 1 is used, there is a problem that the connection loss is significantly deteriorated. In order to incorporate a large number of cores in a common cladding that is not too thick, it is necessary to significantly reduce the MFD as compared with a general-purpose single-mode optical fiber (hereinafter referred to as "SMF"). For example, the connection loss caused by the axial misalignment in the MCF of Non-patent literature 1 having a wavelength of $1.310\,\mu$m and an MFD of $5.4\,\mu$m is deteriorated by 2.54 times as compared with the connection loss caused by the axial misalignment in the general-purpose SMF having a nominal value of an MFD of $8.6\,\mu$m. In other words, as an example, the connection loss between general-purpose SMFs is 0.5 dB or less, whereas the connection loss in the connection between the 12-core MCFs deteriorates to 1.27 dB or less, and as another example, the connection loss between the general-purpose SMFs is 0.35 dB or less, whereas the connection loss between the 12-core MCFs deteriorates to 0.89 dB or less.
In addition, the MCF of Patent literature 1 has a problem that it is not suitable for transmission in a C-band ($1.530\,\mu$m to $1.565\,\mu$m) or an L-band ($1.565\,\mu$m to $1.625\,\mu$m) suitable for high-density wavelength multiplexing transmission. This is because the inter-core XT and the like in a long wavelength band such as the C band are sacrificed in order to pack 12 or 16 cores in the common cladding at a high density.
Furthermore, the MCF of Patent literature 2 has a problem of poor manufacturability. This is because it is necessary to prepare a trench layer having a large absolute value of the relative refractive index difference in order to reduce XT and leakage loss, and the formation of this trench layer makes it difficult to manufacture the MCF preform.
The present disclosure has been made to solve the above-described problems, and an object thereof is to provide a MCF and a MCF cable that effectively reduce XT and leakage loss at a wavelength of $1.565\,\mu$m or a wavelength of $1.625\,\mu$m in a configuration in which 12 or 16 cores are incorporated and a standard coating outer diameter of about 250 $\mu$m is provided as a transmission medium suitable for bidirectional transmission.

[Advantageous Effects of Present Disclosure]

An MCF and an MCF cable of the present disclosure are transmission media suitable for bidirectional transmission, and effectively reduce XT and leakage loss at a wavelength of $1.565\,\mu$m or a wavelength of $1.625\,\mu$m in a configuration in which 12 or 16 cores are incorporated and a standard coating outer diameter of about 250 $\mu$m is

provided.

[Description of Embodiments of Present Disclosure]

The contents of the embodiments of the present disclosure are individually listed and described.

(1) An MCF of the present disclosure includes 12 or 16 core units each including a core extending along a central axis and a depressed layer covering an outer periphery of the core, the depressed layer having a refractive index lower than a maximum refractive index of the core, a common cladding having a refractive index higher than the refractive index of the depressed layer and covering an outer periphery of each of the 12 or 16 core units, and a resin coating covering an outer periphery of the common cladding. By incorporating 12 or 16 core units in the common cladding, in fusion splicing of the MCFs, it is possible to connect the same number of cores as in fusion splicing of fiber ribbons including 12 or 16 optical fibers in one connection operation. On a cross section of the MCF orthogonal to the central axis, the 12 or 16 core units are arranged such that no adjacent relationship is established between cores each having an adjacent relationship with one specific core selected from the 12 or 16 core units, and are each arranged such that centers of the 12 or 16 core units are line symmetric with respect to an axis as a symmetry axis that intersects with the central axis and that passes through none of the centers of the 12 or 16 core units. In the case of such a core arrangement, the MCFs can be fusion-spliced to each other without considering the polarity of the MCF end face. In the MCF of the present disclosure, the resin coating has an outer diameter of $250 \pm 15$ $\mu$m, that is, $235$ $\mu$m to $265$ $\mu$m. Thus, the MCF of the present disclosure achieves a coating outer diameter equivalent to that of a general-purpose MCF. Further, it is possible to achieve a proven coating thickness by reducing a possibility that the common cladding made of a glass material is damaged. An effective cross-sectional area Aeff_1550 [$\mu$m$^2$] at a wavelength of $1.550$ $\mu$m is $70$ $\mu$m$^2$ or more. In this case, in the connection between the MCFs, the deterioration of connection loss and nonlinear interference noise can be reduced. A cable cutoff wavelength $\lambda$cc [$\mu$m] at a length of 22 m may be $1.530$ $\mu$m or less, or $1.460$ $\mu$m or less. Thus, a single-mode operation suitable for long-distance transmission is ensured in a band on the long wavelength side from a C band or a band on the long wavelength side from an S band ($1.460$ $\mu$m to $1.530$ $\mu$m). In the MCF of the present disclosure, when a radius of the core is denoted as ra [$\mu$m], an inner radius of the depressed layer is denoted as rb [$\mu$m], an outer radius of the depressed layer is denoted as rc [$\mu$m], and an absolute value of a relative refractive index difference of the depressed layer with a refractive index of the common cladding used as a reference is denoted as $\Delta$dep [%], a center-to-center distance $\Lambda$ [$\mu$m] between the cores each having the adjacent relationship satisfies a following Formula (1). In this case, the XT at a wavelength of $1.565$ $\mu$m can be reduced to a level sufficient for counter-propagation, for example, to $10^{-3}$/km or less in parallel propagation.
[Math. 1]

$$\Lambda \geq \frac{6.51 \dfrac{\sqrt{Aeff\_1550/\pi}}{\lambda cc} + 14.2}{1 + 0.528 \Delta dep \left( \dfrac{rc - rb}{ra} \right)} \quad \cdots \quad (1)$$

In the MCF of the present disclosure, a shortest distance d_coat [$\mu$m] from a center of the core to an interface between the common cladding and the resin coating satisfies a following Formula (2). In this case, the leakage loss at a wavelength of $1.565$ $\mu$m can be reduced to $0.01$ dB/km or less.
[Math. 2]

$$d\_coat \geq \frac{7.35 \dfrac{\sqrt{Aeff\_1550/\pi}}{\lambda cc} + 4.60}{1 + 0.500 \Delta dep \ln \dfrac{rc}{ra}} \quad \cdots \quad (2)$$

In a configuration in which the common cladding surrounds an outer periphery of each of the 12 core units, a minimum outer diameter CD [$\mu$m] of the common cladding is $185$ $\mu$m or less, $190$ $\mu$m or less, or $195$ $\mu$m or less, and further satisfies a following Formula (3). [Math. 3]

$$CD \geq 2\left[\sqrt{1.5^2+0.5^2}\ \frac{6.51\frac{\sqrt{Aeff/\pi}}{\lambda cc}+14.2}{1+0.528\Delta dep\left(\frac{rc-rb}{ra}\right)}+\frac{7.35\frac{\sqrt{Aeff\_1550/\pi}}{\lambda cc}+4.60}{1+0.500\Delta dep\ln\frac{rc}{ra}}\right]\quad\cdots\quad(3)$$

In a configuration in which the common cladding surrounds an outer periphery of each of the 16 core units, the minimum outer diameter CD of the common cladding is 195 $\mu$m or less, and further satisfies a following Formula (4). The above configuration enables effective reduction of the XT and the leakage loss at a wavelength of 1.565 $\mu$m or 1.625 $\mu$m in a configuration having a standard coating outer diameter of about 250 $\mu$m.
[Math. 4]

$$CD \geq 2\left[1.5\sqrt{2}\ \frac{6.51\frac{\sqrt{Aeff/\pi}}{\lambda cc}+14.2}{1+0.528\Delta_{dep}\left(\frac{rc-rb}{ra}\right)}+\frac{7.35\frac{\sqrt{Aeff\_1550/\pi}}{\lambda cc}+4.60}{1+0.500\Delta dep\ln\frac{rc}{ra}}\right]\quad\cdots\quad(4)$$

(2) In the above (1), the center-to-center distance A may satisfy a following Formula (5). In this case, the XT at a wavelength of 1.565 $\mu$m can be reduced to a level sufficient for counter-propagation, for example, to $10^{-4}$/km or less in parallel propagation.

[Math. 5]

$$\Lambda \geq \frac{7.27\frac{\sqrt{Aeff\_1550/\pi}}{\lambda cc}+14.4}{1+0.495\Delta dep\left(\frac{rc-rb}{ra}\right)}\quad\cdots\quad(5)$$

The shortest distance d_coat may satisfy a following Formula (6). In this case, the leakage loss at a wavelength of 1.565 $\mu$m can be reduced to 0.001 dB/km or less.
[Math. 6]

$$d\_coat \geq \frac{8.30\frac{\sqrt{Aeff\_1550/\pi}}{\lambda cc}+4.16}{1+0.400\Delta dep\ln\frac{rc}{ra}}\quad\cdots\quad(6)$$

In the configuration in which the common cladding surrounds the outer periphery of each of the 12 core units, the minimum outer diameter CD of the common cladding may satisfy a following Formula (7).
[Math. 7]

$$CD \geq 2\left[\sqrt{1.5^2+0.5^2}\ \frac{7.27\frac{\sqrt{Aeff\_1550/\pi}}{\lambda cc}+14.4}{1+0.495\Delta dep\left(\frac{rc-rb}{ra}\right)}+\frac{8.30\frac{\sqrt{Aeff\_1550/\pi}}{\lambda cc}+4.16}{1+0.400\Delta dep\ln\frac{rc}{ra}}\right]\quad\cdots\quad(7)$$

(3) In the above (1), the center-to-center distance A [$\mu$m] may satisfy a following Formula (8). In this case, the XT at a wavelength of 1.625 $\mu$m can be reduced to a level sufficient for counter-propagation, for example, to $10^{-3}$/km or less in parallel propagation.
[Math. 8]

$$\Lambda \geq \frac{6.97\dfrac{\sqrt{Aeff\_1550/\pi}}{\lambda cc}+14.5}{1+0.601\Delta dep\left(\dfrac{rc-rb}{ra}\right)} \quad \cdots \quad (8)$$

The shortest distance d_coat [μm] may satisfy a following Formula (9). In this case, the leakage loss at a wavelength of 1.625 μm can be reduced to 0.01 dB/km or less.
[Math. 9]

$$d\_coat \geq \frac{8.32\dfrac{\sqrt{Aeff\_1550/\pi}}{\lambda cc}+2.30}{1+0.471\Delta dep\ln\dfrac{rc}{ra}} \quad \cdots \quad (9)$$

In the configuration in which the common cladding surrounds the outer periphery of each of the 12 core units, the minimum outer diameter CD of the common cladding may satisfy a following Formula (10).
[Math. 10]

$$CD \geq 2\left[\sqrt{1.5^2+0.5^2}\,\frac{6.97\dfrac{\sqrt{Aeff\_1550/\pi}}{\lambda cc}+14.5}{1+0.601\Delta dep\left(\dfrac{rc-rb}{ra}\right)}+\frac{8.32\dfrac{\sqrt{Aeff\_1550/\pi}}{\lambda cc}+2.30}{1+0.471\Delta dep\ln\dfrac{rc}{ra}}\right] \quad \cdots \quad (10)$$

(4) In (1), the center-to-center distance Λ [μm] may satisfy a following Formula (11). In this case, the XT at a wavelength of 1.625 μm can be reduced to a level sufficient for counter-propagation, for example, to $10^{-4}$/km or less in parallel propagation. [Math. 11]

$$\Lambda \geq \frac{7.99\dfrac{\sqrt{Aeff\_1550/\pi}}{\lambda cc}+13.7}{1+0.519\Delta dep\left(\dfrac{rc-rb}{ra}\right)} \quad \cdots \quad (11)$$

The shortest distance d_coat [μm] may satisfy a following Formula (12). In this case, the leakage loss at a wavelength of 1.625 μm can be reduced to 0.001 dB/km or less.
[Math. 12]

$$d\_coat \geq \frac{9.44\dfrac{\sqrt{Aeff\_1550/\pi}}{\lambda cc}+1.47}{1+0.365\Delta dep\ln\dfrac{rc}{ra}} \quad \cdots \quad (12)$$

In the configuration in which the common cladding surrounds the outer periphery of each of the 12 core units, the minimum outer diameter CD of the common cladding may satisfy a following Formula (13).
[Math. 13]

$$CD \geq 2\left[\sqrt{1.5^2+0.5^2}\,\frac{7.99\dfrac{\sqrt{Aeff\_1550/\pi}}{\lambda cc}+13.7}{1+0.519\Delta dep\left(\dfrac{rc-rb}{ra}\right)}+\frac{9.44\dfrac{\sqrt{Aeff\_1550/\pi}}{\lambda cc}+1.47}{1+0.365\Delta dep\ln\dfrac{rc}{ra}}\right] \quad \cdots \quad (13)$$

(5) In any one of the above (1) to (4), the Δdep may be 0.5% or less, or 0.35% or less. By suppressing the difference in refractive index between the depressed layer and the common cladding in this manner, it is possible to improve the manufacturability of the MCF preform.

(6) An MCF of the present disclosure includes 12 or 16 cores each extending along a central axis, a common cladding covering an outer periphery of each of the 12 or 16 cores, and a resin coating covering an outer periphery of the common cladding. On a cross section of the MCF orthogonal to the central axis, the 12 or 16 cores are arranged such that no adjacent relationship is established between cores each having an adjacent relationship with one specific core selected from the 12 or 16 cores, and are each arranged such that centers of the 12 or 16 cores are line symmetric with respect to an axis as a symmetry axis that intersects with the central axis and that passes through none of the centers of the 12 or 16 cores. The resin coating has an outer diameter of $250\pm15$ $\mu$m. An effective cross-sectional area Aeff_1550 [$\mu$m$^2$] at a wavelength of 1.550 $\mu$m is 70 $\mu$m$^2$ or more. A cable cutoff wavelength $\lambda$cc [$\mu$m] at a length of 22 m is 1.530 $\mu$m or less, or 1.460 $\mu$m or less. An outer diameter of the common cladding is 143 $\mu$m to 195 $\mu$m. A center-to-center distance between cores each having the adjacent relationship is 28.5 $\mu$m to 40 $\mu$m. A shortest distance from a center of each of the 12 or 16 cores to an interface between the common cladding and the resin coating is 26 $\mu$m to 35 $\mu$m. A parallel propagation XT between the cores each having the adjacent relationship at a wavelength of 1.565 $\mu$m is 10$^{-3}$/km or less. A leakage loss from the common cladding to the resin coating at a wavelength of 1.565 $\mu$m is 0.01 dB/km or less. With this configuration, similarly to the MCF described in (1), in a configuration having a standard coating outer diameter of about 250 $\mu$m, it is possible to effectively reduce the XT and the leakage loss at a wavelength of 1.565 $\mu$m or a wavelength of 1.625 $\mu$m.

(7) An MCF cable of the present disclosure includes the MCF according to any one of the above (1) to (6). The MCF is incorporated with an average bending radius of 0.06 m to 0.6 m. Thus, the MCF cable that effectively reduces the XT and the leakage loss at a wavelength of 1.565 $\mu$m or 1.625 $\mu$m is obtained.

Each aspect listed in the [Description of Embodiments of Present Disclosure] section is applicable to each of all remaining aspects or to all combinations of these remaining aspects.

[Details of Embodiments of Present Disclosure]

Hereinafter, specific structures of an MCF and an MCF cable of the present disclosure will be described in detail with reference to the accompanying drawings. The present disclosure is not limited to these examples, but is defined by the scope of the claims, and is intended to include all modifications within the scope and meaning equivalent to the scope of the claims. In the description of the drawings, the same elements are denoted by the same reference numerals, and redundant description will be omitted.

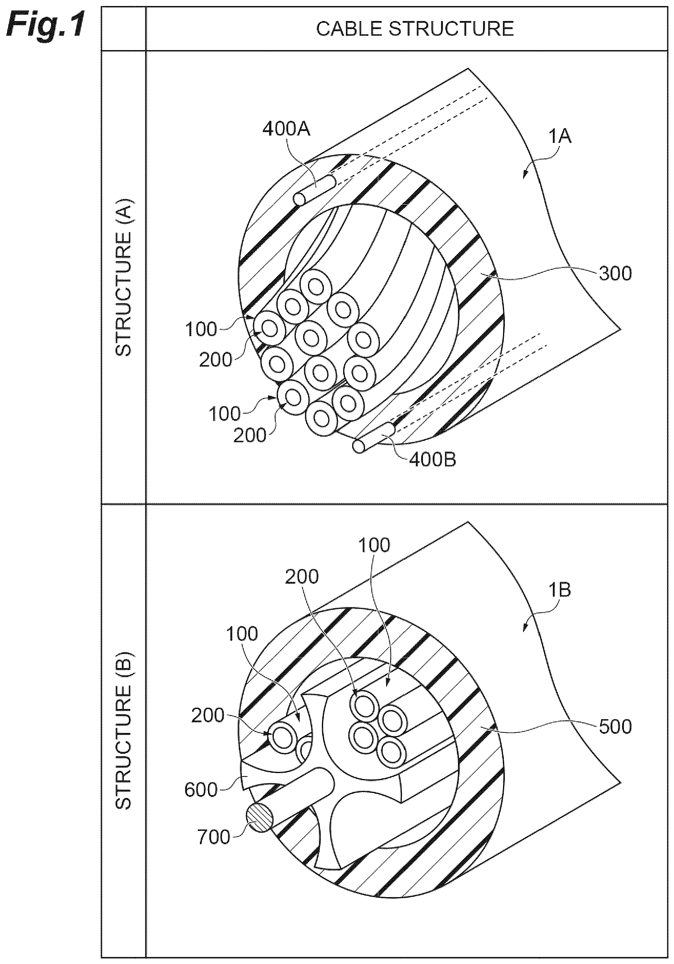

FIG. 1 is a diagram showing various structures of the MCF cable of the present disclosure (in FIG. 1, denoted as "cable structure"). The MCF of the present disclosure is incorporated in such a MCF cable.

An MCF cable 1A shown in the upper part of FIG. 1 (denoted as "structure (A)" in FIG. 1) includes an outer sheath 300 including a MCF housing space extending along a longitudinal direction of the MCF cable 1A, and a plurality of MCF 100 which are MCFs of the present disclosure. Two tension members 400A and 400B extending along the MCF housing space are embedded in the outer sheath 300. Each MCF 100 includes a glass fiber 200 having an outer periphery surface covered with a resin coating.

On the other hand, an MCF cable 1B shown in the lower part of FIG. 1 (denoted as "structure (B)" in FIG. 1) includes an outer sheath 500 including a MCF housing space extending along a longitudinal direction of the MCF cable 1B, a slotted core 600 dividing the MCF housing space into a plurality of spaces, and the plurality of MCFs 100 which are MCFs of the present disclosure. The slotted core 600 dividing the MCF housing space into a plurality of spaces is housed in the outer sheath 500. A tension member 700 extending along the longitudinal direction of the MCF cable 1B is embedded in the slotted core 600. The plurality of MCFs 100 are housed in any of the plurality of spaces divided by the slotted core 600.

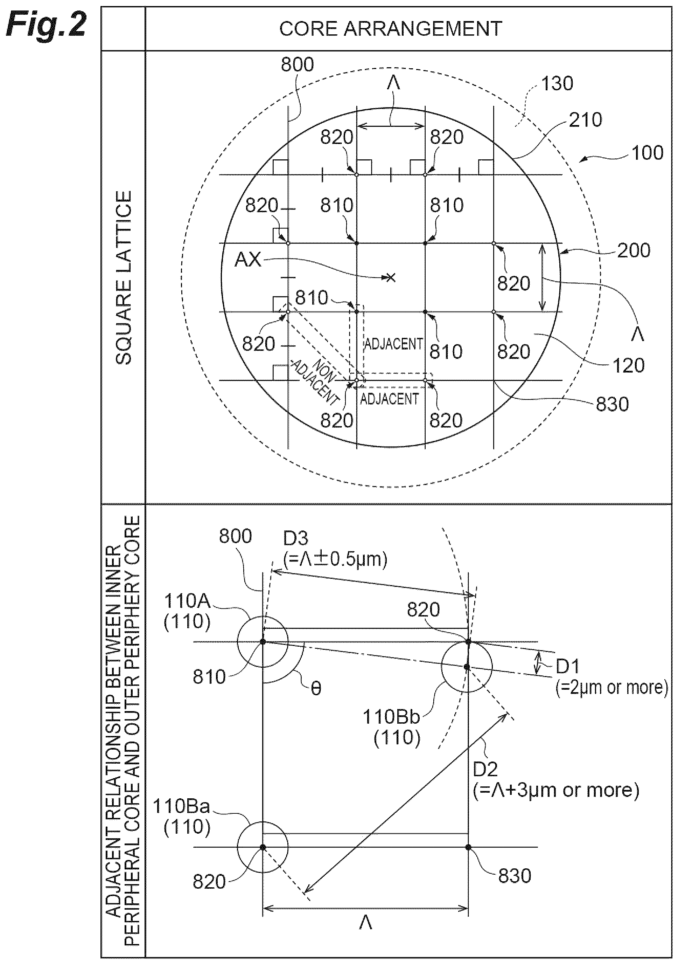

FIG. 2 is a diagram for explaining various conditions for determining a core arrangement in the MCF of the present disclosure (denoted as "core arrangement" in FIG. 2). The upper part of FIG. 2 (denoted as "square lattice" in FIG. 2) shows a square lattice defined on the cross section of the MCF, and the lower part of FIG. 2 (denoted as "adjacent relationship between inner peripheral core and outer periphery core" in FIG. 2) shows a diagram for explaining the arrangement state of two outer periphery cores whose adjacent relationship is maintained with respect to one inner peripheral core.

The MCF of the present disclosure includes 12 or 16 cores. Thus, even when the MCFs to be connected are fusion-spliced after the rotational alignment is performed one by one, the number of cores to be connected per fusion-splicing when connecting ultra-multi-core cables can be made equal to that in ribbon fusion-splicing of a cable incorporating a large number of fiber ribbons in which 12 or 16 optical fibers are integrated. Ribbon fusion means a connection method in which each of optical fibers included in a fiber ribbon is collectively fused to an optical fiber to be connected.

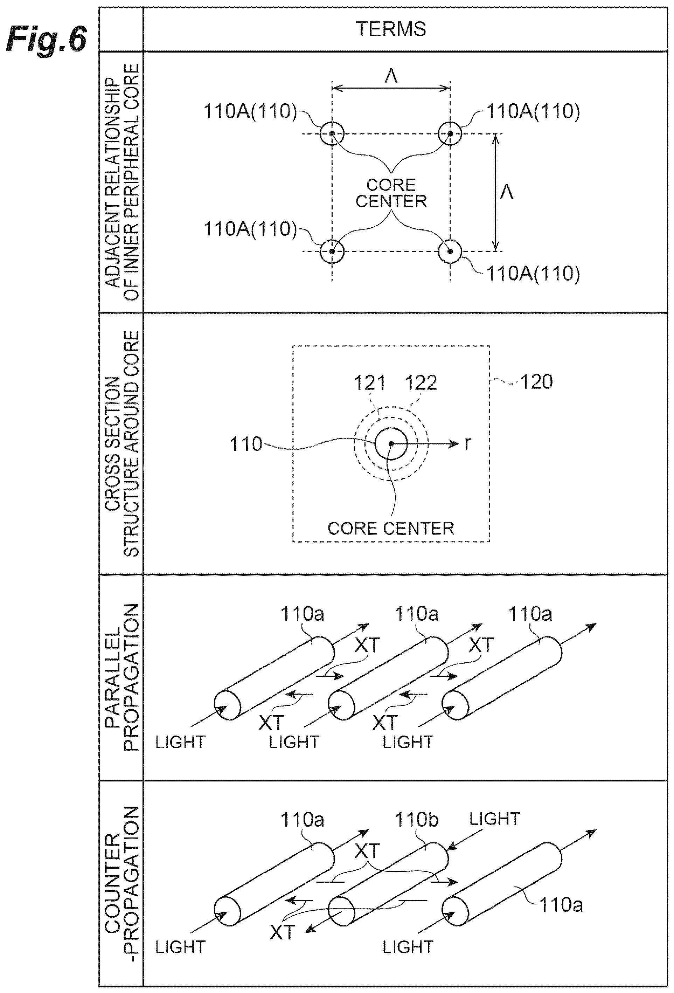

In addition, the MCF of the present disclosure has a core arrangement in which no adjacent relationship is established between a plurality of cores having an adjacent relationship with one specific core selected from 12 or 16 cores. Thus, in bidirectional communication in which signals are transmitted in different propagation directions between cores having an adjacent relationship (hereinafter, referred to as "adjacent cores"), it is possible to reduce the XT from another core having further adjacent relationship with respect to the adjacent core of the specific core to the predetermined core, that is, the counter-propagation XT. Here, the adjacent core of the specific core means a core having a large influence of the parallel propagation XT to the specific core, which will be described later (see FIG. 6), and specifically, a core having a center-to-center distance between the adjacent cores closest to the specific core and a core having a center interval equivalent thereto (difference is 2 $\mu$m or less) correspond to the adjacent core. Note that the parallel propagation XT means a normal XT in a case where light is propagated in the same direction.

As an example, as shown in FIG. 2, 12 or 16 cores are arranged so as to form a core arrangement similar to a square lattice in which some of the 12 or 16 cores are shifted from the lattice points, that is, a core arrangement in which no adjacent relationship is established between adjacent cores each having an adjacent relationship with a specific core. At this time, on the cross section of the MCF, the center of each core is arranged at the position of line symmetric with a predetermined axis passing through the central axis of the MCF that coincides with the center of the common cladding and not passing through the center of each core as a symmetry axis. Thus, it is possible to connect a predetermined end of one MCF to any end of another MCF without being conscious of "polarity" at the time of MCF connection. When the core arrangement of the MCF of the present disclosure has one fold rotational symmetry, that is, when the core arrangement of the MCF of the present disclosure does not have two fold or more rotational symmetry, each core can be distinguished without adding a "marker" other than the core.

In the example of FIG. 2, the variation of the core position is not taken into consideration, but the center position of the core may vary within 0.5 $\mu$m from a predetermined lattice point. Thus, the manufacturing tolerance is greatly enabled. In an actual MCF, the positions of the lattice points (inner lattice point and outer lattice point) to which the inner peripheral core and the outer periphery core are each allocated can be obtained by optimizing the lattice point interval, the orientation, and the position of the square lattice so that the sum of the square errors of the position deviations of the lattice points corresponding to the centers of the cores is minimized.

In detail, the MCF 100 shown in FIG. 2 includes the glass fiber 200 extending along a central axis AX and a resin coating 130 covering the glass fiber 200. The glass fiber 200 includes 12 or 16 cores extending along the central axis AX and a common cladding 120 covering each of the 12 cores. In the present specification, when simply referring to "12 or 16 cores", it is denoted as a core 110.

A square lattice 800, which is shown in the upper part of FIG. 2 and serves as a reference of the core arrangement, is defined on a cross section of the MCF 100 orthogonal to the central axis AX. In addition, the shape of an outer periphery 210 of the common cladding 120 on the cross section of the MCF 100 is a circle. That is, the square lattice 800 is a square lattice having a lattice point interval that coincides a center-to-center distance A between adjacent cores, and is configured by a plurality of lattice points arranged point-symmetrically with respect to the central axis AX such that four inner lattice points 810 surround the central axis AX at the shortest distance. More specifically, the square lattice 800 includes the four inner lattice points 810 and eight outer lattice points 820 that surround the four inner lattice points 810 and have an adjacent relationship with any of the four inner lattice points 810. Note that, in a case where 12 cores are arranged, no core is arranged in a non-outer lattice point 830 that does not have an adjacent relationship with any of the four inner lattice points 810.

For example, each of the 12 cores are belong to any one of an inner peripheral core 110A (core 110) allocated to the four inner lattice points 810 and an outer periphery core (core 110) allocated to the eight outer lattice points 820. A distance between each of the center positions of the four inner peripheral cores 110A and a corresponding inner lattice point among the four inner lattice points 810 is 0.5 $\mu$m or less. Meanwhile, each of the eight outer periphery cores belongs to either a lattice point arranged core 110Ba or a lattice point unarranged core 110Bb. The lattice point arranged core 110Ba is a core whose center is arranged at a position where the distance to the corresponding outer lattice point among the eight outer lattice points 820 is 0.5 $\mu$m or less. The lattice point unarranged core 110Bb is a core whose center is arranged at a position of a distance D1 of 2 $\mu$m or more from the corresponding outer lattice point 820. In addition, an angle $\theta$ between two line segments extending from one inner peripheral core 110A toward two outer periphery cores having an adjacent relationship is 90 [deg] when both of the two outer periphery cores are the lattice point arranged cores 110Ba, and is less than 90 [deg] when one of the two outer periphery cores is the lattice point unarranged core 110Bb. The center of each of the lattice point unarranged cores 110Bb is arranged at a position spaced apart from a specific inner lattice point, which has an adjacent relationship with a corresponding outer lattice point among the four inner lattice points 810, by a distance D3. That is, each of the lattice point unarranged cores 110Bb is arranged on a circumference of a circle having a specific inner lattice point as a center. D3 is (A - 0.5 $\mu$m) to (A + 0.5 $\mu$m). The center of each of the lattice point unarranged cores 110Bb is arranged such that a distance from a specific outer lattice point (see a pair of outer lattice points whose adjacent relationship is shown in the upper part of FIG. 2) having an adjacent relationship with a corresponding outer lattice point is longer than the distance D1 from the corresponding outer lattice point, and is spaced apart from the centers of all of the remaining lattice point unarranged cores 110Bb by a distance D2. D2 is equal to or more than A + 3 $\mu$m. In this specification, when the above-described condition is satisfied, it is defined that the lattice point unarranged core 110Bb maintains the adjacent relationship with the other cores, that is, the inner peripheral core 110A and the other outer periphery cores, similarly to the adjacent relationship between the lattice points.

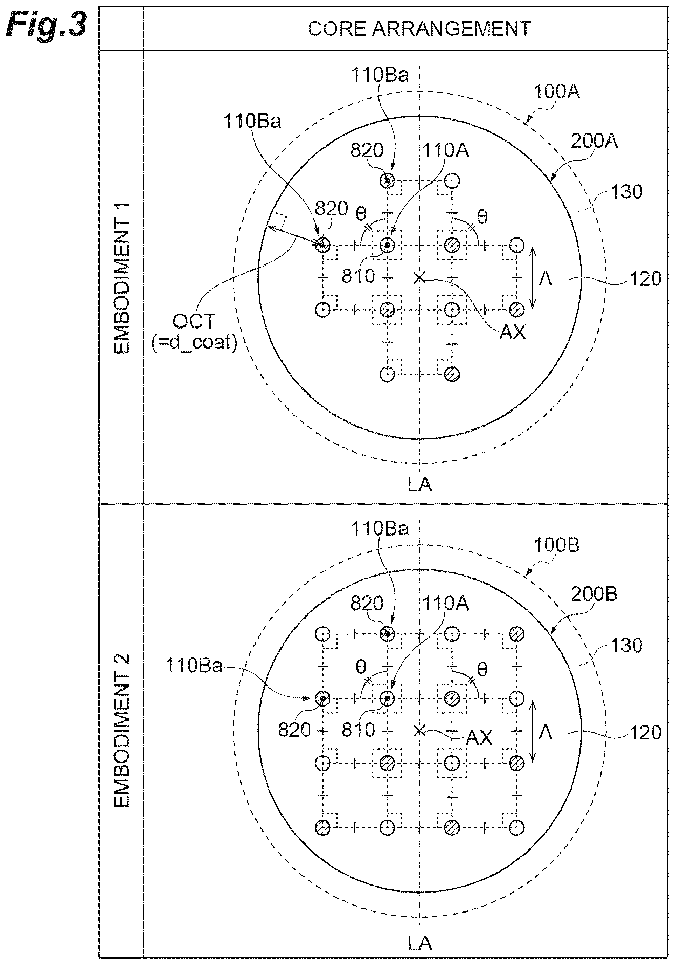

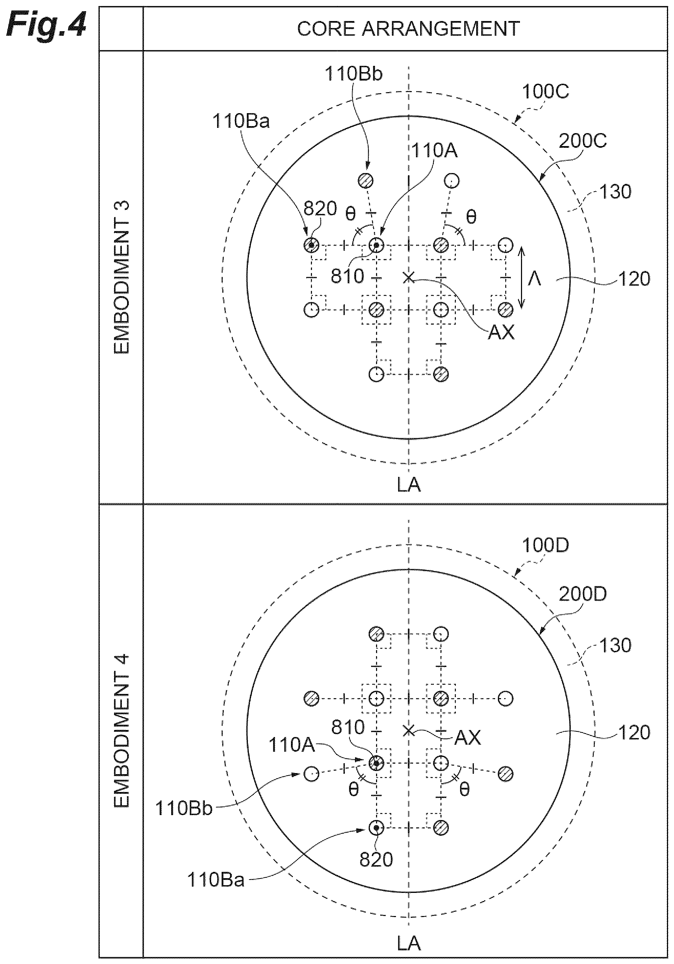

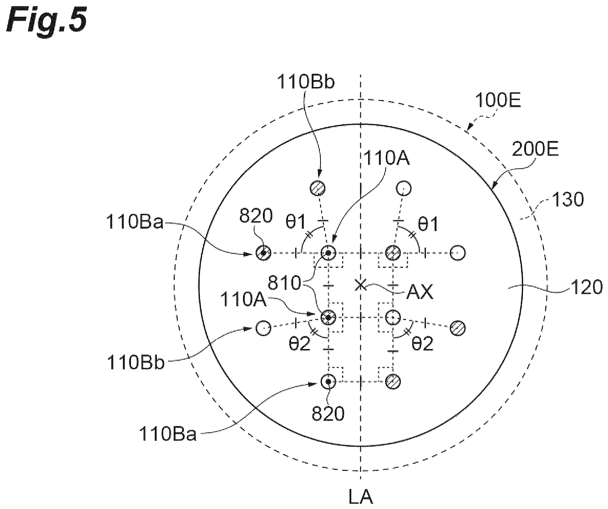

FIG. 3 is a diagram showing a core arrangement in the first and second embodiments of the MCF of the present disclosure (denoted as "core arrangement" in FIG. 3). The upper part of FIG. 3 (denoted as "embodiment 1" in FIG. 3) discloses a cross section of an MCF 100A having 12 cores, and the lower part of FIG. 3 (denoted as "embodiment 2" in FIG. 3) discloses a cross section of an MCF 100B having 16 cores. FIG. 4 is a diagram showing a core arrangement in the third and fourth embodiments of the MCF of the present disclosure (denoted as "core arrangement" in FIG. 4). The upper part of FIG. 4 (denoted as "embodiment 3" in FIG. 4) discloses a cross section of an MCF 100C having 12 cores, and the lower part of FIG. 4 (denoted as "embodiment 4" in FIG. 4) discloses a cross section of an MCF 100D having 12 cores. FIG. 5 is a diagram showing a core arrangement in the fifth embodiment of the MCF of the present disclosure, and a cross section of an MCF 100E having 12 cores is disclosed. In FIGS. 3 to 5, the dimensions of the core position and the core are not based on the actual scale for easy visual recognition. In addition, in any of FIGS. 3 to 5, a symmetry axis LA is shown so that it can be recognized that 12 or 16 cores are arranged in line symmetric.

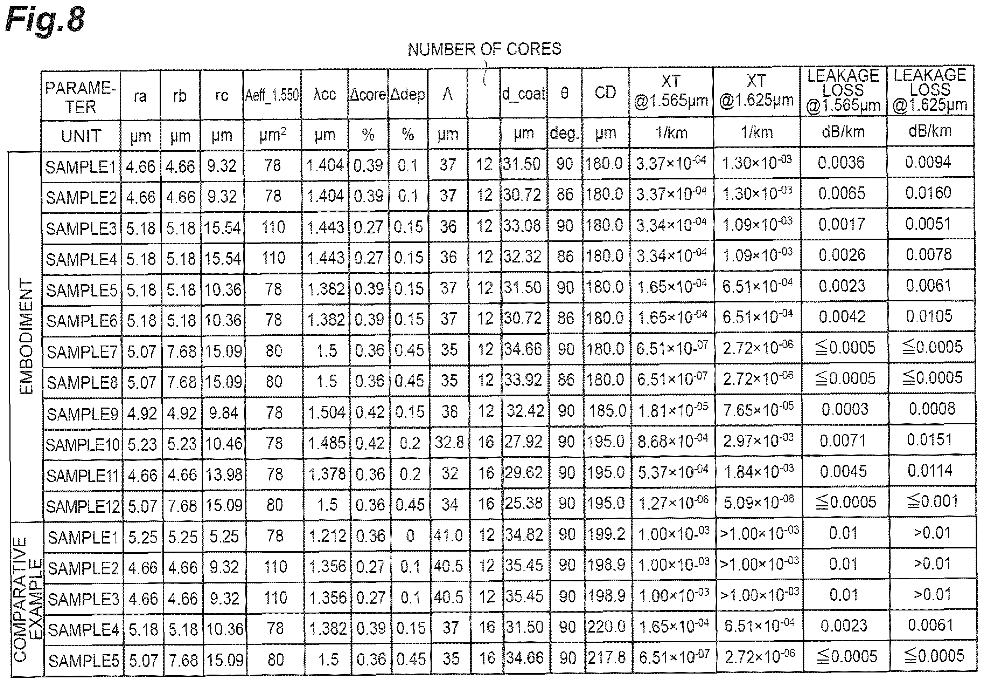

The MCF 100A shown in the upper part of FIG. 3 includes a glass fiber 200A surrounded by the resin coating 130. The glass fiber 200A includes 12 cores extending along the central axis AX and the common cladding 120 covering each of the 12 cores. The 12 cores are classified into 4 inner peripheral cores 110A and 8 outer periphery cores according to the types of the allocated lattice points. The 8 outer periphery cores are classified into the lattice point arranged core 110Ba and the lattice point unarranged core 110Bb. In the case of the MCF 100A, all of the 8 outer periphery cores are classified as the lattice point arranged core 110Ba. That is, on the cross section of the glass fiber 200A orthogonal to the central axis AX of the MCF 100A, 4 inner peripheral cores 110A are arranged on the inner lattice point 810 among the lattice points of the square lattice 800 shown in the upper part of FIG. 2, and 8 outer periphery cores each of which is the lattice point arranged core 110Ba are arranged on the outer lattice point 820 surrounding the inner lattice point 810.

Meanwhile, the MCF 100B shown in the lower part of FIG. 3 includes a glass fiber 200B surrounded by the resin coating 130. The glass fiber 200B includes 16 cores extending along the central axis AX and the common cladding 120 covering each of the 16 cores. The 16 cores are classified into 4 inner peripheral cores 110A and 12 outer periphery cores according to the types of the allocated lattice points. The 12 outer periphery cores are classified into the lattice point arranged core 110Ba and the lattice point unarranged core 110Bb. In the case of the MCF 100B, all of the 12 outer periphery cores are classified as the lattice point arranged core 110Ba. That is, on the cross section of the glass fiber 200B orthogonal to the central axis AX of the MCF 100B, 4 inner peripheral cores 110A are arranged on the inner lattice point 810 among lattice points of the square lattice 800, and 12 outer periphery cores each of which is the lattice point arranged core 110Ba are arranged on the outer lattice point 820 surrounding the inner lattice point 810. As described above, both the MCF 100A and the MCF 100B have rotational symmetry of two or more times.

Note that the MCF 100C shown in the upper part of FIG. 4, the MCF 100D shown in the lower part of FIG. 4, and the MCF 100E shown in FIG. 5 have the same structure as the MCF 100A shown in the upper part of FIG. 3 except for the core arrangement. That is, the MCFs 100C to 100E include glass fibers 200C to 200E corresponding to the glass fiber 200A and the resin coating 130. Each of the glass fibers 200C to 200E includes 12 cores extending along the central axis AX and the common cladding 120 covering each of the 12 cores. The common cladding 120 has a circular outer periphery on a cross section of each of the glass fibers 200C to 200E orthogonal to the central axis AX. The 12 cores are classified into 4 inner peripheral cores 110A and 8 outer periphery cores according to the types of the allocated lattice points. The 8 outer periphery cores are classified into the lattice point arranged core 110Ba and the lattice point unarranged core 110Bb. In any of the MCF 100C to the MCF 100E, the lattice point unarranged core 110Bb is arranged at a position that is line symmetric with respect to the symmetry axis LA, and the core arrangement in each of the MCF 100C to the MCF 100E does not have two or more times of rotational symmetry with the central axis AX as the center.

In the MCF 100C shown in the upper part of FIG. 4, the glass fiber 200C surrounded by the resin coating 130 includes 12 cores extending along the central axis AX and the common cladding 120 covering each of the 12 cores. The 12 cores are classified into 4 inner peripheral cores 110A and 8 outer periphery cores according to the types of the allocated lattice points. The 8 outer periphery cores are classified into the lattice point arranged core 110Ba and the lattice point unarranged core 110Bb.

In the MCF 100C, 4 inner peripheral cores 110A are arranged on the inner lattice points 810 of the square lattice 800 set on the cross section orthogonal to the central axis AX. In this case, the distance between the inner lattice point 810 and the center of the corresponding inner peripheral core 110A is 0.5 $\mu$m or less. 8 outer periphery cores are arranged around the 4 inner peripheral cores 110A. Among the 8 outer periphery cores, 6 outer periphery cores are lattice point arranged cores 110Ba, and are arranged such that a distance between the outer lattice point 820 to which each of the outer periphery cores is allocated and the core center is 0.5 $\mu$m or less. The remaining 2 outer periphery cores are arranged as lattice point unarranged cores 110Bb in a state where the core centers are shifted from the outer lattice points 820 to which each of the outer periphery cores is allocated, in a state where the adjacent relationship shown in the lower part of FIG. 2 is maintained. Thus, in the MCF 100C, a ratio of the number of lattice point arranged cores to the number of lattice point unarranged cores is 6 to 2.

In addition, in the MCF 100C, as shown in the drawing, the one lattice point arranged core 110Ba and one lattice point unarranged core 110Bb, which has an adjacent relationship with one inner peripheral core 110A, are arranged so as to form an angle $\theta$ with the one inner peripheral core 110A as a center.

In the MCF 100D shown in the lower part of FIG. 4, 4 inner peripheral cores 110A are arranged on the inner lattice points 810 of the square lattice 800 set on the cross section orthogonal to the central axis AX. In this case, the distance between the inner lattice point 810 and the center of the corresponding inner peripheral core 110A is 0.5 $\mu$m or less. 8 outer periphery cores are arranged around the 4 inner peripheral cores 110A. Among the 8 outer periphery cores, 6 outer periphery cores are lattice point arranged cores 110Ba, and are arranged such that a distance between the outer lattice point 820 to which each of the outer periphery cores is allocated and the core center is 0.5 $\mu$m or less. The remaining 2 outer periphery cores are arranged as lattice point unarranged cores 110Bb in a state where the core centers are shifted from the outer lattice points 820 to which each of the outer periphery cores is allocated, in a state where the adjacent relationship shown in the lower part of FIG. 2 is maintained. Thus, in the MCF 100D, similarly to the MCF 100C, the ratio of the number of lattice point arranged cores to the number of lattice point unarranged cores is 6 to 2.

In the MCF 100E according to the fifth embodiment shown in FIG. 5, similarly to the MCF 100C and the MCF 100D, 4 inner peripheral cores 110A are each arranged on the inner lattice points 810 of the square lattice set on the cross section orthogonal to the central axis AX, and 8 outer periphery cores are arranged around the inner lattice points. 4 outer periphery cores among the 8 outer periphery cores are lattice point arranged cores 110Ba, and are arranged on the outer lattice points 820 to which each of the outer periphery cores is allocated. The remaining 4 outer periphery cores are arranged as lattice point unarranged cores 110Bb in a state where the core centers are shifted from the outer lattice points 820 to which each of the outer periphery cores is allocated, in a state where the adjacent relationship shown in the lower part of FIG. 2 is maintained. Thus, in the MCF 100E, a ratio of the number of lattice point arranged cores to the number of lattice point unarranged cores is 4 to 4. Note that the 2 lattice point unarranged cores 110Bb forming a pair are arranged at positions that are line symmetric with respect to the symmetry axis LA, but the core arrangement in the MCF 100E does not have two or more times of rotational symmetry with the central axis AX as the center. In addition, for the pair of lattice point unarranged cores 110Bb arranged in line symmetric, the offset angle of the first pair is $\theta$1, and the offset angle of the second pair is $\theta$2. However, $\theta$2 and $\theta$1 do not need to coincide with each other.

Further, when compared with the MCF 100C and the MCF 100D in which 2 outer periphery cores among the 8 outer periphery cores are set as the lattice point unarranged core 110Bb, the MCF 100E in which 4 outer periphery cores among the 8 outer periphery cores are set as the lattice point unarranged core 110Bb increases asymmetry compared with the MCF 100C and the MCF 100D.

FIG. 6 is a diagram for explaining the adjacent relationship of an inner peripheral core, a cross section structure around the core, a parallel propagation and a parallel propagation XT, and a counter-propagation XT as main terms used in the present specification.

(Adjacent Relationship of Inner Peripheral Core)

In the present specification, an adjacent relationship between the cores is defined as a core having an adjacent relationship with respect to a specific core when focusing on one specific core among 12 or 16 cores arranged on the cross section of the MCF, the core having a minimum center interval with respect to the specific core and a difference from the minimum center interval of 2 $\mu$m or less. In particular, FIG. 6 shows the 4 inner peripheral cores 110A (cores 110) arranged on the 4 inner lattice points 810 surrounding the central axis AX at lattice point intervals that coincide the center-to-center distance A between adjacent cores. Among the 4 inner peripheral cores 110A, a pair of inner peripheral cores 110A constituting each side of the square lattice has an adjacent relationship. On the other hand, no adjacent relationship is established for the pair of the inner peripheral cores 110A positioned on the diagonal line of the square lattice.

(Cross Section Structure around Core)

In each of the MCFs 100A to 100E, the cross section structure around each core 110 is such that the common cladding 120 surrounds the outer periphery of the core 110. The core 110 includes the inner peripheral core 110A, the lattice point arranged core 110Ba, and the lattice point unarranged core 110Bb. The common cladding 120 may be provided to be in direct contact with the core 110, but an optical cladding 121 may be provided between the common cladding 120 and the core 110. In addition, a depressed layer 122 having $\Delta$dep with a small absolute value may be provided between the optical cladding 121 and the common cladding 120. The optical cladding 121 may be prepared for each core 110 and may have a relative refractive index difference $\Delta$2 of -0.1% to 0.1% with respect to the refractive index of the common cladding 120. However, when $\Delta$2 is a negative value, the optical cladding 121 functions as a depressed layer, and the absolute value of the relative refractive index difference is given by $\Delta$dep. In addition, when the depressed layer 122 is provided, the depressed layer 122 has a relative refractive index difference $\Delta$3 of -2.0% or more and less than -1.0%, -1.0% or more and less than -0.7%, - 0.7% or more and less than -0.4%, or -0.4% or more and less than 0% with respect to the refractive index of the common cladding 120. An absolute value $\Delta$dep of the relative refractive index difference of the depressed layer 122 may be 0.5% or less or 0.35% or less.

(Parallel Propagation and Parallel Propagation XT)

In the example shown in FIG. 6, three cores (first cores 110a that propagates light in the same direction) having an adjacent relationship are shown. That is, the adjacent relationship is established between the left core and the central core, and the adjacent relationship is established between the central core and the right core. That is, a state in which the cores having the adjacent relationship propagate light in the same direction is referred to as "parallel propagation". In this case, a parallel propagation XT generates as a normal XT between adjacent cores that propagate light in the same direction.

(Counter-Propagation and Counter-Propagation XT)

On the other hand, in a counter-propagation, light is propagated in different directions in two cores having an adjacent relationship. That is, in the example of FIG. 6, the adjacent relationship is established between the left core and the central core, but the left core functions as the first core 110a, and the central core functions as a second core 110b that propagates light in a direction different from the first core 110a. The normal XT generated between the left core and the central core is less likely to affect the communication quality. Similarly, the right core having the adjacent relationship with the central core functions as the first core 110a, and the normal XT generated between the right core and the central core is less likely to affect the communication quality. A state in which cores having an adjacent relationship propagate light in different directions is referred to as "counter-propagation". However, between the left core and the right core, both of which function as the first core 110a, the XT affects the communication quality through the central core, which functions as the second core 110b. In this manner, the XT between cores that propagate light in the same direction through cores that establish an adjacent relationship and propagate light in opposite directions is referred to as "counter-propagation XT".

In the following description, although description will be made with reference to the examples of "parallel propagation" and "counter-propagation" shown in FIG. 6, when the XT (parallel propagation XT: XT_co) between cores (hereinafter, referred to as "adjacent cores") in which an adjacent relationship is established at a fiber length L1 is set as XT_co (L1), in a case where the XT is represented by a decibel value, the parallel propagation XT at a fiber length L2 can be represented by the following Formula (14), and the XT increases by 10 dB at 10 times the distance.

[Math. 14]

$$XT\_co(L2) = XT\_co(L1) + 10\log_{10}(L2 / L1) \quad \cdots \quad (14)$$

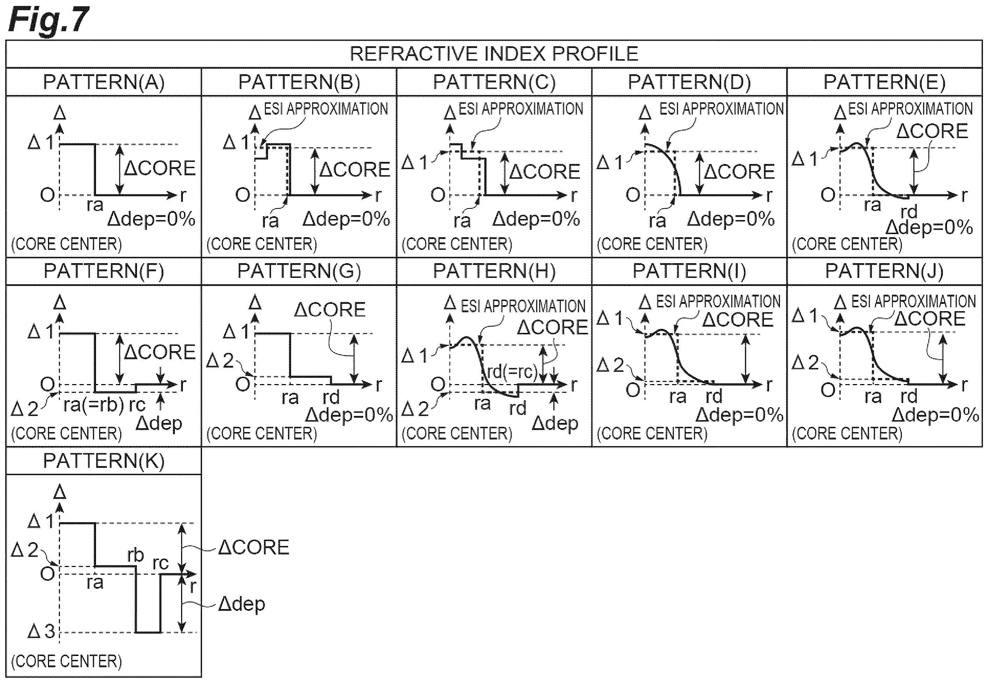

When the XT is represented by a decibel value, for example, in the example of the counter-propagation shown in FIG. 7, the XT from the right core to the left core through the central core (counter-propagation XT: XT_counter) can be represented by the following Formula (15) using XT_co which is the parallel propagation XT between the left core and the central core and between the central core and the right core.

[Math. 15]

$$XT\_counter = 2XT\_co - 10\log_{10}2 \quad \cdots \quad (15)$$

When the counter-propagation XT at the fiber length L1 is XT_counter (L1), in a case where XT is represented by a decibel value, the counter-propagation XT at the fiber length L2 can be represented by the following Formula (16), and XT_counter increases by 20 dB at 10 times the distance.

[Math. 16]

$$XT\_counter(L2) = XT\_counter(L1) + 20\log_{10}(L2 / L1) \quad \cdots \quad (16)$$

A sum XT_co_tot of XT_co from the adjacent cores to the predetermined core is represented by the following Formula (17), where N is the number of adjacent cores of the predetermined core. The above Formula (17) is based on the premise that XT_co between adjacent cores is uniform. When the difference in XT_co between adjacent cores is not negligible, the sum XT_co_tot is represented by the following Formula (18), where XT_co from a core n among N adjacent cores to a predetermined core is XT_co (n).

[Math. 17]

$$XT\_co\_tot = XT\_co + 10\log_{10}N \quad \cdots \quad (17)$$

[Math. 18]

$$XT\_co\_tot = 10\log_{10}\left(\sum_{n}^{N}10^{\frac{XT\_co(n)}{10}}\right) \quad \cdots \quad (18)$$

The inventor has found that a sum XT_counter_tot of the counter-propagation XT to the predetermined core is likely to be the following Formula (19) when the number of "adjacent cores of adjacent cores (corresponding to a right core when the predetermined core is a left core in the example of the counter-propagation shown in FIG. 6)" of the predetermined core is M, but is not the following Formula (19), and the sum XT_counter_tot is the following Formula (20) when the number of adjacent cores (including the predetermined core) to a core n among N adjacent cores (central cores) of the predetermined core (left core) is K(n). Thus, in the MCF having 12 cores, XT_counter_tot to any of the 4 cores belonging to the inner peripheral core group can be represented by the following Formula (21).
[Math. 19]

$$XT\_counter\_tot = XT\_counter + 10\log_{10}M = 2XT\_co - 10\log_{10}2 + 10\log_{10}M \quad \cdots \quad (19)$$

[Math. 20]

$$XT\_counter\_tot = XTcounter + 10\log_{10}\sum_{n=1}^{N}(K(n)-1) = 2XT\_co - 10\log_{10}2 + 10\log_{10}\sum_{n=1}^{N}(K(n)-1)\cdots(20)$$

[Math. 21]

$$XT\_counter\_tot \leq XT\_counter + 10\log_{10}8 = 2XT\_co + 10\log_{10}\frac{8}{2} \quad \cdots \quad (21)$$

Thus, in order to make the counter-propagation XT after 10 km propagation (corresponding to a fiber length of 10 km) in the 12-core MCF -20 dB or less (= -20 dB/10 km), it is sufficient that the parallel propagation XT (XT_co) between the adjacent cores in terms of a fiber length L (km) satisfy the following Formula (22), and the sum of the parallel propagation XTs from the 4 cores having the adjacent relationship to any of the 4 cores belonging to the inner peripheral core group satisfy the following Formula (23).
[Math. 22]

$$XT\_co(L) \leq -12.8 + 10\log_{10}\frac{L}{10} \quad \cdots \quad (22)$$

[Math. 23]

$$XT\_co\_tot(L) \leq -6.8 + 10\log_{10}\frac{L}{10} \quad \cdots \quad (23)$$

In order to make the counter-propagation XT after 10 km propagation corresponding to a fiber length of 10 km in the 12-core MCF -40 dB or less (= -40 dB/10 km), it is sufficient that the parallel propagation XT (XT_co) between the adjacent cores in terms of the fiber length L (km) satisfy the following Formula (24), and the sum of the parallel propagation XTs from the 4 cores having the adjacent relationship to any of the 4 cores belonging to the inner peripheral core group satisfy the following Formula (25).
[Math. 24]

$$XT\_co(L) \leq -22.8 + 10\log_{10}\frac{L}{10} \quad \cdots \quad (24)$$

[Math. 25]

$$XT\_co\_tot(L) \leq -16.8 + 10\log_{10}\frac{L}{10} \quad \cdots \quad (25)$$

Next, a profile structure applicable to the MCF of the present disclosure will be described. FIG. 7 is a diagram showing a refractive index profile around each core applicable to the MCF of the present disclosure. Note that, unless otherwise specified, a "relative refractive index difference Δ" means a relative refractive index difference with respect to the refractive index of the common cladding. That is, the "relative refractive index difference Δ" is not a relative refractive index difference with respect to the refractive index of pure silica glass.

Regarding the core structure in the MCF of the present disclosure, the refractive index profile of the core and the optical characteristics associated therewith can be selected as an appropriate structure depending on the application, and for example, the refractive index profiles of pattern (A) to pattern (K) shown in FIG. 7 can be applied. In FIG. 7, Δ is a relative refractive index difference with reference to the refractive index of the common cladding, r is a radius from each core center, and each core center·Δ = 0% is shown in a local coordinate system as an origin O. The structure may be the same or different between the cores. In addition, Δcore means an absolute value of a relative refractive index difference of each core with respect to a refractive index of the common cladding, and Δdep means an absolute value of a relative refractive index difference of a portion functioning as a depressed layer or a depressed layer.

The pattern (A) shown in FIG. 7 is a step-type refractive index profile, the pattern (B) is a ring-type refractive index profile, the pattern (C) is a double-step-type refractive index profile, the pattern (D) is a graded-type refractive index profile, and the pattern (E) is a droop-type refractive index profile, which are applicable to the core structure in the MCF of the present disclosure. Furthermore, the core structure is also applicable to the pattern (F) and the pattern (H) in which the Depressed type refractive index profile is provided around the core, the pattern (G), the pattern (I), and the pattern (J) in which the Raised type refractive index profile is provided around the core, and the pattern (K) in which the Matched type refractive index profile is provided around the core.

For the refractive index profiles other than the step-type refractive index profile of the pattern (A), ESI (Equivalent-step-index) approximation is used, and a core radius ra and Δ (Δ1) of the core in the case of approximation by the step-type can be obtained (the above Non-patent literature 2).

The above Non-patent literature 2 can be easily applied to a case where the boundary between the core and the cladding is clear, but it is difficult to apply the above Non-patent literature 2 to a case where the boundary between the core and the cladding is unclear, such as the droop-type refractive index profile of the pattern (E), and for example, when the technique of the Non-patent literature 2 is applied as it is by regarding rd in the pattern (E) as the radius of the core, the ESI approximation is not successful. Note that the term "cladding" means the common cladding 120 or the optical cladding 121. In such a case, it is preferable to regard r at which Δ is Δ of 2/5 at r having a negative value with the largest absolute value of the gradient $(\partial\Delta/\partial r)$ of the refractive index profile as the core radius ra and apply the above Non-patent literature 2. Using a value represented by the following Formula (26) or (27) as a refractive index of the cladding at this time, ra and Δ1 can be obtained by calculation based on the above Non-patent literature 2. The value represented by the following Formula (26) is a simple average of Δ in the range where r is from ra to rd. The value represented by the following Formula (27) is obtained by a weighted average by r in the range. Δ2 is preferably -0.10% to 0.10%. This is because the manufacturability is greatly improved. The optical cladding in the pattern (F) and the pattern (H) has a negative relative refractive index difference, and substantially functions as a depressed layer of the absolute value Δdep.

[Math. 26]

$$\Delta 2 \approx \int_{ra}^{rd} \Delta dr \quad \cdots \quad (26)$$

[Math. 27]

$$\Delta 2 \approx \left. \int_{ra}^{rd} \Delta r dr \middle/ \int_{ra}^{rd} r dr \right. \quad \cdots \quad (27)$$

The depressed layer 122 having a refractive index lower than the refractive index of the optical cladding 121 and the common cladding 120 may be provided around the optical cladding 121 (pattern (K) in FIG. 7). However, when the relative refractive index difference Δ3 of the depressed layer 122 with respect to the refractive index of the common cladding 120 is -0.5% or less, the manufacturability is significantly deteriorated, and thus Δ3 ≥ -0.4% is sufficient, Δ3 ≥ -0.3% is more preferable, and Δ3 ≥ -0.2% is still more preferable. Note that the absolute value Δdep of the relative refractive index difference of the depressed layer 122 or the optical cladding 121 functioning as a depressed layer may be 0.5% or less, or 0.35% or less from the viewpoint of manufacturability.

The core and cladding are preferably made of glass containing silica glass as a main component, because low transmission loss and high mechanical reliability can be achieved. It is preferable that a difference in refractive index between the core and the cladding is generated by adding Ge to the core. Alternatively, it is preferable that a difference in refractive index between the core and the cladding be generated by adding F to the cladding. It is preferable to add a small amount of F to the core and the optical cladding because a Depressed type profile can be achieved with good manufacturability. Cl may be added to the core or the cladding. Thus, it is possible to reduce OH groups and reduce the absorption loss caused by the OH groups. A small amount of P may be contained in the core or cladding. Thus, it is possible to improve the manufacturing efficiency in some glass synthesis processes.

The MCF of the present disclosure having the cross section structure shown in FIGS. 3 to 5 has the resin coating 130, and the diameter of the resin coating 130 is $250 \pm 15 \mu m$, that is, 235 $\mu m$ to 265 $\mu m$. Thus, the MCF of the present disclosure can be cabled without making any major changes to existing cabled facilities.

In a typical general-purpose SMF, a nominal value of a minimum outer diameter CD of the cladding corresponding to the diameter of the glass fiber 200 is 125 $\mu m$, and a nominal value of the diameter of the resin coating 130 is 245 $\mu m$ or more and about 250 $\mu m$, but in a coated small-diameter type SMF, a nominal value of the diameter of the resin coating is 180 $\mu m$, 190 $\mu m$, or 200 $\mu m$. At this time, a nominal value of the thickness of the resin coatings 130 is 27.5 $\mu m$, 32.5 $\mu m$, or 37.5 $\mu m$. A sufficient nominal value of coating thickness is desired because the thinner resin coating 130 may result in a weaker optical fiber in a case where sand, dust, etc., scratches the coating surface, which may reach the glass cladding.

In the MCF of the present disclosure, in order to achieve that a nominal value of the diameter of the resin coating 130 is 250 $\mu m$ and a nominal value of the coating thickness is 27.5 $\mu m$ or more, it is sufficient that a nominal value of CD is 195 $\mu m$ or less.

In order to achieve that a nominal value of diameter of the resin coating 130 is 245 $\mu m$ and a nominal value of coating thickness is 27.5 $\mu m$ or more, it is sufficient that the nominal value of CD is 190 $\mu m$ or less. In order to achieve that a nominal value of the diameter of resin coating 130 is 50 $\mu m$ and a nominal value of coating thickness is 32.5 $\mu m$ or more, it is sufficient that the nominal value of CD is 185 $\mu m$ or less. In order to achieve that a nominal value of diameter of the resin coating 130 is 245 $\mu m$ and a nominal value of coating thickness is 32.5 $\mu m$ or more, it is sufficient that the nominal value of CD is 180 $\mu m$ or less. In order to achieve that a nominal value of diameter of the resin coating 130 is 250 $\mu m$ and a nominal value of coating thickness is 37.5 $\mu m$ or more, it is sufficient that the nominal value of CD is 175 $\mu m$ or less. Further, in order to achieve that a nominal value of diameter of the resin coating 130 is 245 $\mu m$ and a nominal value of coating thickness is 37.5 $\mu m$ or more, it is sufficient that the nominal value of CD is 170 $\mu m$ or less. In each case, the tolerance of the coating thickness may be $\pm 15 \mu m$ or less, and more preferably $\pm 10 \mu m$ or less.

Next, as another example of the MCF of the present disclosure, a MCF suitable for bidirectional transmission that reduces the XT and the leakage loss at a wavelength of 1.565 $\mu m$ or a wavelength of 1.625 $\mu m$ will be described. A wavelength of 1.565 $\mu m$ is the upper limit of the C band (1.530 $\mu m$ to 1.565 $\mu m$), and a wavelength of 1.625 $\mu m$ is the upper limit of the L band (1.565 $\mu m$ to 1.625 $\mu m$).

Non-patent literature 1 discloses a MCF having a small MFD in order to reduce the inter-core XT and the leakage loss. However, application of the MCF of Patent literature 1 to bidirectional transmission causes a significant deterioration in connection loss. Patent literature 1 discloses a MCF for short-distance transmission in an O band (1.260 $\mu m$ to 1.360 $\mu m$). However, the use of the MCF of Patent literature 1 cannot avoid the deterioration of the inter-core XT in a long wavelength band such as the C band, and such a MCF is not suitable for the high-density wavelength multiplexing transmission in the C band or the L band. Further, in Patent literature 2, in order to reduce the inter-core XT and the leakage loss, the Depressed type shown in FIG. 7 is adopted as the refractive index profile around each core. In this case, it is necessary to increase the absolute value of the relative refractive index difference of the depressed layer around each core, and the manufacturability of the MCF preform is poor.

The MCF of the present disclosure has the resin coating 130 with a standard outer diameter of 250 $\mu m \pm 15 \mu m$, i.e., 235 $\mu m$ to 265 $\mu m$, and incorporates 12 or 16 cores 110. Specifically, the MCF of the present disclosure includes 12 cores 110 each extending along the central axis AX, the common cladding 120 covering each of the 12 or 16 cores 110, and the resin coating 130 covering an outer periphery of the common cladding 120. On the cross section of the MCF orthogonal to the central axis AX, the 12 or 16 cores 110 are arranged such that no adjacent relationship is established between cores each having an adjacent relationship with one specific core selected from the 12 or 16 cores 110. Further, the 12 or 16 cores 110 are each arranged such that the centers of the 12 or 16 cores 110 are line symmetric with respect to an axis as the symmetry axis LA that intersects with the central axis and that passes through none of the centers of the 12 or 16 cores 110. That is, the MCF of the present disclosure has any of the core arrangements shown in FIGS. 3 to 5. In addition, any of the pattern (A) to the pattern (K) shown in FIG. 8 is applicable to the refractive index profile around each core. In a structure in which only the depressed layer 122 or the optical cladding 121 functioning as the depressed layer, or both the optical cladding 121 and the depressed layer 122 are provided around the core 110 as in the pattern (F), the pattern (H), and the pattern (K) in FIG. 8, one core unit is constituted by a group of the core 110 and the depressed layer 122 corresponding to the core 110, or a group of the core 110, the optical cladding 121, and the depressed layer 122. One core unit includes one core 110, and the center of the one core unit coincides with the center of the one core 110 included in the one core unit. In the following description, when the "depressed layer 122" is simply mentioned, it is assumed that the optical cladding 121 that substantially functions as a depressed layer is also included in addition to the depressed layer.

In the MCF of the present disclosure, an effective cross-sectional area Aeff_1550 [$\mu m^2$] at a wavelength of 1.550

μm is 70 μm² or more. A cable cutoff wavelength λcc [μm] at a length of 22 m is 1.530 μm or less, or 1.460 μm or less. The common cladding 120 has an outer diameter of 143 μm to 195 μm. The center-to-center distance between the cores each having adjacent relationship is 28.5 μm to 40 μm. A shortest distance from a center of each of the 12 or 16 cores 110 to an interface between the common cladding 120 and the resin coating 130 is 26 μm to 35 μm. The parallel propagation XT between the cores each having the adjacent relationship at a wavelength of 1.565 μm is $10^{-3}$/km or less. At a wavelength of 1.565 μm, the leakage loss from the common cladding 120 to the resin coating 130 is 0.01 dB/km or less.

In the following description, among the patterns (A) to (K) shown in FIG. 7, the MCF samples having the refractive index profiles of the patterns (F), (H), and (K) in which the depressed layer 122 or the optical cladding 121 functioning as the depressed layer is provided around each core will be described. However, the various conditions described below also apply to the groups in which the depressed layer is not provided as the refractive index profile around each core, that is, the pattern (A) to the pattern (E), the pattern (G), the pattern (I), and the pattern (J). Specifically, in the MCF sample to which any pattern of the group in which the depressed layer is not provided as the refractive index profile around each core is applied, a parameter of the depressed layer 122 described later, that is, an absolute value Δdep of a relative refractive index difference is set to zero, and an inner radius rb and an outer radius rc of the depressed layer 122 satisfy a relationship of rb = rc.

FIG. 8 shows the specifications of sample 1 to sample 12 of the embodiment according to the MCF of the present disclosure and sample 1 to sample 5 of a comparative example. In the table of FIG. 8, each of sample 2, sample 4, sample 6, and sample 8 of the embodiment is the MCF having the 12 or 16 cores 110 including a set of the specific inner peripheral core 110A, the lattice point arranged core 110Ba, and the lattice point unarranged core 110Bb, and the refractive index profile around each core is any one of the pattern (F), the pattern (H), and the pattern (K) of the refractive index profile shown in FIG. 7. In the table of FIG. 8, each of sample 1, sample 3, sample 5, sample 7, and sample 9 to sample 12 of the embodiment and sample 1 to sample 5 of the comparative example is the MCF in which the 12 or 16 cores 110 are arranged on each lattice point of the square lattice. In sample 1 of the comparative example, the refractive index profile around each core is a pattern without a depressed layer. In sample 2 to sample 5 of the comparative example, the refractive index profile around each core is any one of the pattern (F), the pattern (H), and the pattern (K) of the refractive index profile shown in FIG. 7. In addition, in sample 7, sample 8, and sample 12 of the embodiment and sample 5 of the comparative example, the refractive index profile around each core is the pattern (K), and Δ2 is 0%.

Among the parameters shown in the table of FIG. 8, ra [μm] is the radius of the core 110. The inner radius of the depressed layer 122 is represented by rb [μm]. The outer radius of the depressed layer 122 is represented by rc [μm]. Aeff_1550 [μm²] is an effective cross-sectional area at a wavelength of 1.550 μm. The cable cutoff wavelength at a length of 22 m is represented by λcc [μm]. The maximum difference in refractive index of the core 110 with respect to the refractive index of the common cladding 120 is represented by Δcore [%]. An absolute value of a relative refractive index difference of the depressed layer 122 with respect to the refractive index of the common cladding 120 is represented by Δdep [%]. A [μm] is a center-to-center distance between adjacent cores. The shortest distance from the core 110 to the interface between the common cladding 120 and the resin coating 130 is represented by d_coat [μm]. θ [deg] is an index indicating a position relationship between the inner peripheral core 110A whose center is positioned on the inner lattice point 810 and the lattice point arranged core 110Ba and the lattice point unarranged core 110Bb that are in an adjacent relationship with the inner peripheral core 110A and have the same center-to-center distance A with respect to the inner peripheral core 110A. Further, θ is an angle between a line segment extending from the center of the inner peripheral core 110A toward the center of the lattice point arranged core 110Ba and a line segment extending from the center of the inner peripheral core 110A toward the center of the lattice point unarranged core 110Bb. CD [μm] is the minimum outer diameter of the common cladding 120. XT @ 1.565 μm [1/km] is the parallel propagation XT between adjacent cores at a wavelength of 1.565 μm. XT @ 1.625 μm [1/km] is the parallel propagation XT between adjacent cores at a wavelength of 1.625 μm. Leakage loss @ 1.565 μm [dB/km] is a leakage loss at a wavelength of 1.565 μm. Leakage loss @ 1.625 μm [dB/km] is a leakage loss at a wavelength of 1.625 μm.

In FIGS. 3 and 5, the center-to-center distances A between adjacent cores are all set to be equal, but may vary within a predetermined range from a nominal value A_nominal. In this case, it is possible to increase the manufacturing tolerance. Similarly, the minimum outer diameter CD of the common cladding 120 may also vary from the nominal value CD_nominal within a predetermined range.

The "lower limit of Aeff", the "desirable range of XT", the "desirable center-to-center distance between adjacent cores", the "desirable d_coat", and the "allowable minimum outer diameter CD" that match the specifications of sample 1 to sample 4 of the embodiment shown in FIG. 8 are shown below.

(Lower Limit of Aeff)

Each core of the MCF of the present disclosure may have an effective cross-sectional area Aeff_1550 of 70 μm² or more at a wavelength of 1.550 μm. This enables reduction of noise caused by nonlinear interference. In addition, the connection loss due to axial misalignment between the MCFs of the present disclosure can be reduced.

(Desirable XT Range)

In the MCF of the present disclosure, the sum of the counter-propagation XTs from adjacent cores to any core is preferably -20 dB or less even after 10 km propagation at a wavelength of 1.565 $\mu$m. Since the counter-propagation XT from cores other than the adjacent core is sufficiently low and can be ignored, a sufficient signal-to-noise rate (SNR) is realized even when coherent detection is performed.

In the MCF of the present disclosure, the sum of the counter-propagation XTs from the adjacent core to any core is preferably -40 dB or less even after 10 km propagation in the used wavelength band. Since the counter-propagation XT from cores other than the adjacent core is sufficiently low and can be ignored, a sufficient SNR can be realized even when intensity modulation-direct detection (IM-DD) is performed.

In the MCF of the present disclosure, it is sufficient that the parallel propagation XT between adjacent cores is $10^{-3}$/km or less (-30 dB or less) at a wavelength of 1.565 $\mu$m. Thus, when 12 or 16 cores are arranged in a square lattice core arrangement serving as a reference, the sum of the counter-propagation XTs can be made lower than $10^{-3}$/km (= -30 dB) even after propagation through a repeater span or link in 10 km, for all pairs of adjacent cores. Specifically, when 12 cores are arranged, the parallel propagation XT can be less than $7 \times 10^{-4}$/km, and when 16 cores are arranged, the parallel propagation XT can be less than $8 \times 10^{-4}$/km.

Further, in the MCF of the present disclosure, the parallel propagation XT between adjacent cores is preferably $10^{-4}$/km or less (-40 dB or less) at a wavelength of 1.565 $\mu$m. Thus, in a case where 12 or 16 cores are arranged in the square lattice core arrangement serving as a reference, the sum of the counter-propagation XTs between adjacent cores can be set to $10^{-3}$/km or less (-30 dB or less) even after propagation through a repeater span or a link in 100 km, for all pairs of adjacent cores. Specifically, when 12 cores are arranged, the parallel propagation XT can be less than $8 \times 10^{-4}$/km, and when 16 cores are arranged, the parallel propagation XT can be less than $9 \times 10^{-4}$/km.

(Desirable Center-to-Center Distance between Adjacent Cores)

When the parallel propagation XT between the adjacent cores is reduced to $10^{-3}$/km or less at a wavelength of 1.565 $\mu$m, the center-to-center distance A between the adjacent cores may satisfy the following Formula (28). Here, ra [$\mu$m] is the radius of the core 110, rb [$\mu$m] is the inner radius of the depressed layer 122, rc [$\mu$m] is the outer radius of the depressed layer 122, Aeff_1550 [$\mu$m$^2$] is the effective cross-sectional area at a wavelength of 1.550 $\mu$m, $\lambda$cc [$\mu$m] is the cable cutoff wavelength at a length of 22 m, and $\Delta$dep [%] is the absolute value of the relative refractive index difference of the depressed layer 122 with respect to a refractive index of the common cladding 120, and is a value of 0 or more by definition.

[Math. 28]

$$\Lambda \geq \frac{6.51 \dfrac{\sqrt{Aeff\_1550/\pi}}{\lambda cc} + 14.2}{1 + 0.528 \Delta dep \left( \dfrac{rc - rb}{ra} \right)} \quad \cdots \quad (28)$$

In addition, in a case where the parallel propagation XT between adjacent cores is reduced to $10^{-4}$/km or less at a wavelength of 1.565 $\mu$m, A preferably satisfies the following Formula (29).

[Math. 29]

$$\Lambda \geq \frac{7.27 \dfrac{\sqrt{Aeff\_1550/\pi}}{\lambda cc} + 14.4}{1 + 0.495 \Delta dep \left( \dfrac{rc - rb}{ra} \right)} \quad \cdots \quad (29)$$

In a case where the parallel propagation XT between adjacent cores is reduced to $10^{-3}$/km or less at a wavelength of 1.625 $\mu$m, A preferably satisfies the following Formula (30).

[Math. 30]

$$\Lambda \geq \frac{6.97 \dfrac{\sqrt{Aeff\_1550/\pi}}{\lambda cc} + 14.5}{1 + 0.601 \Delta dep \left( \dfrac{rc - rb}{ra} \right)} \quad \cdots \quad (30)$$

Further, in a case where the parallel propagation XT between adjacent cores is reduced to $10^{-4}$/km or less at a wavelength of 1.625 $\mu$m, A preferably satisfies the following Formula (31).
[Math. 31]

$$\Lambda \geq \frac{7.99 \frac{\sqrt{Aeff\_1550/\pi}}{\lambda cc} + 13.7}{1 + 0.519\Delta dep\left(\frac{rc - rb}{ra}\right)} \quad \cdots \quad (31)$$

(Desirable d_coat)

When the leakage loss from the common cladding 120 to the resin coating 130 is reduced to 0.01 dB/km or less at a wavelength of 1.565 $\mu$m, the shortest distance d_coat from the core center to the outer periphery surface of the common cladding 120 preferably satisfies the following Formula (32). The outer periphery surface of the common cladding 120 corresponds to the interface between the common cladding 120 and the resin coating 130. In addition, d_coat of the outermost periphery core, that is, the minimum value of d_coat is generally referred to as an outer periphery cladding thickness (OCT), but in the present specification, d_coat means a value that can be defined for each core.
[Math. 32]

$$d\_coat \geq \frac{7.35 \frac{\sqrt{Aeff\_1550/\pi}}{\lambda cc} + 4.60}{1 + 0.500\Delta dep \ln\frac{rc}{ra}} \quad \cdots \quad (32)$$

In the case of reducing the leakage loss from the common cladding 120 to the resin coating 130 to 0.001 dB/km or less at a wavelength of 1.565 $\mu$m, d_coat preferably satisfies the following Formula (33).
[Math. 33]

$$d\_coat \geq \frac{8.30 \frac{\sqrt{Aeff\_1550/\pi}}{\lambda cc} + 4.16}{1 + 0.400\Delta dep \ln\frac{rc}{ra}} \quad \cdots \quad (33)$$

In the case of reducing the leakage loss from the common cladding 120 to the resin coating 130 to 0.0005 dB/km or less at a wavelength of 1.565 $\mu$m, d_coat preferably satisfies the following Formula (34).
[Math. 34]

$$d\_coat \geq \frac{8.59 \frac{\sqrt{Aeff\_1550/\pi}}{\lambda cc} + 3.99}{1 + 0.372\Delta dep \ln\frac{rc}{ra}} \quad \cdots \quad (34)$$

On the other hand, in the case of reducing the leakage loss from the common cladding 120 to the resin coating 130 to 0.01 dB/km or less at a wavelength of 1.625 $\mu$m, d_coat preferably satisfies the following Formula (35).
[Math. 35]

$$d\_coat \geq \frac{8.32 \frac{\sqrt{Aeff\_1550/\pi}}{\lambda cc} + 2.30}{1 + 0.471\Delta dep \ln\frac{rc}{ra}} \quad \cdots \quad (35)$$

In the case of reducing the leakage loss from the common cladding 120 to the resin coating 130 to 0.001 dB/km or less at a wavelength of 1.625 $\mu$m, d_coat preferably satisfies the following Formula (36).
[Math. 36]

$$d\_coat \geq \frac{9.44\dfrac{\sqrt{Aeff\_1550/\pi}}{\lambda cc}+1.47}{1+0.365\Delta dep\ln\dfrac{rc}{ra}} \quad \cdots \quad (36)$$

In the case of reducing the leakage loss from the common cladding 120 to the resin coating 130 to 0.0005 dB/km or less at a wavelength of 1.625 $\mu$m, d_coat preferably satisfies the following Formula (37).
[Math. 37]

$$d\_coat \geq \frac{9.79\dfrac{\sqrt{Aeff\_1550/\pi}}{\lambda cc}+1.20}{1+0.335\Delta dep\ln\dfrac{rc}{ra}} \quad \cdots \quad (37)$$

(Allowable Minimum Outer Diameter CD)

In a case where the parallel propagation XT between adjacent cores is reduced to $10^{-3}$/km or less at a wavelength of 1.565 $\mu$m and the leakage loss from the common cladding 120 to the resin coating 130 is reduced to 0.01 dB/km or less, in the square lattice core arrangement serving as a reference, the minimum outer diameter CD in the MCF in which 16 cores are arranged preferably satisfies the following Formula (38), and the minimum outer diameter CD in the MCF in which 12 cores are arranged preferably satisfies the following Formula (39).
[Math. 38]

$$CD \geq 2\left[1.5\sqrt{2}\,\frac{6.51\dfrac{\sqrt{Aeff/\pi}}{\lambda cc}+14.2}{1+0.528\Delta_{\mathrm{dep}}\left(\dfrac{rc-rb}{ra}\right)}+\frac{7.35\dfrac{\sqrt{Aeff\_1550/\pi}}{\lambda cc}+4.60}{1+0.500\Delta dep\ln\dfrac{rc}{ra}}\right] \quad \cdots \quad (38)$$

[Math. 39]

$$CD \geq 2\left[\sqrt{1.5^2+0.5^2}\,\frac{6.51\dfrac{\sqrt{Aeff/\pi}}{\lambda cc}+14.2}{1+0.528\Delta dep\left(\dfrac{rc-rb}{ra}\right)}+\frac{7.35\dfrac{\sqrt{Aeff\_1550/\pi}}{\lambda cc}+4.60}{1+0.500\Delta dep\ln\dfrac{rc}{ra}}\right] \quad \cdots \quad (39)$$

In a case where the parallel propagation XT between adjacent cores is reduced to $10^{-4}$/km or less at a wavelength of 1.565 $\mu$m and the leakage loss from the common cladding 120 to the resin coating 130 is reduced to 0.001 dB/km or less, in the square lattice core arrangement serving as a reference, the minimum outer diameter CD in the MCF in which 16 cores are arranged preferably satisfies the following Formula (40), and the CD in the MCF in which 12 cores are arranged preferably satisfies the following Formula (41).
[Math. 40]

$$CD \geq 2\left[1.5\sqrt{2}\,\frac{7.27\dfrac{\sqrt{Aeff\_1550/\pi}}{\lambda cc}+14.4}{1+0.495\Delta dep\left(\dfrac{rc-rb}{ra}\right)}+\frac{8.30\dfrac{\sqrt{Aeff\_1550/\pi}}{\lambda cc}+4.16}{1+0.400\Delta dep\ln\dfrac{rc}{ra}}\right] \quad \cdots \quad (40)$$

[Math. 41]

$$CD \geq 2\left[\sqrt{1.5^2+0.5^2}\,\frac{7.27\frac{\sqrt{Aeff\_1550/\pi}}{\lambda cc}+14.4}{1+0.495\Delta dep\left(\frac{rc-rb}{ra}\right)}+\frac{8.30\frac{\sqrt{Aeff\_1550/\pi}}{\lambda cc}+4.16}{1+0.400\Delta dep\ln\frac{rc}{ra}}\right] \quad \cdots \quad (41)$$

On the other hand, in a case where the parallel propagation XT between adjacent cores is reduced to $10^{-3}$/km or less at a wavelength of 1.625 $\mu$m and the leakage loss from the common cladding 120 to the resin coating 130 is reduced to 0.01 dB/km or less, in the square lattice core arrangement serving as a reference, the minimum outer diameter CD in the MCF in which 16 cores are arranged preferably satisfies the following Formula (42), and the minimum outer diameter CD in the MCF in which 12 cores are arranged preferably satisfies the following Formula (43).
[Math. 42]

$$CD \geq 2\left[1.5\sqrt{2}\,\frac{6.97\frac{\sqrt{Aeff\_1550/\pi}}{\lambda cc}+14.5}{1+0.601\Delta dep\left(\frac{rc-rb}{ra}\right)}+\frac{8.32\frac{\sqrt{Aeff\_1550/\pi}}{\lambda cc}+2.30}{1+0.471\Delta dep\ln\frac{rc}{ra}}\right] \quad \cdots \quad (42)$$

[Math. 43]

$$CD \geq 2\left[\sqrt{1.5^2+0.5^2}\,\frac{6.97\frac{\sqrt{Aeff\_1550/\pi}}{\lambda cc}+14.5}{1+0.601\Delta dep\left(\frac{rc-rb}{ra}\right)}+\frac{8.32\frac{\sqrt{Aeff\_1550/\pi}}{\lambda cc}+2.30}{1+0.471\Delta dep\ln\frac{rc}{ra}}\right] \quad \cdots \quad (43)$$

In a case where the parallel propagation XT between adjacent cores is reduced to $10^{-4}$/km or less at a wavelength of 1.625 $\mu$m and the leakage loss from the common cladding 120 to the resin coating 130 is reduced to 0.001 dB/km or less, in the square lattice core arrangement serving as a reference, the CD in the MCF in which 16 cores are arranged preferably satisfies the following Formula (44), and the CD in the MCF in which 12 cores are arranged preferably satisfies the following Formula (45).
[Math. 44]

$$CD \geq 2\left[1.5\sqrt{2}\,\frac{7.99\frac{\sqrt{Aeff\_1550/\pi}}{\lambda cc}+13.7}{1+0.519\Delta dep\left(\frac{rc-rb}{ra}\right)}+\frac{9.44\frac{\sqrt{Aeff\_1550/\pi}}{\lambda cc}+1.47}{1+0.365\Delta dep\ln\frac{rc}{ra}}\right] \quad \cdots \quad (44)$$

[Math. 45]

$$CD \geq 2\left[\sqrt{1.5^2+0.5^2}\,\frac{7.99\frac{\sqrt{Aeff\_1550/\pi}}{\lambda cc}+13.7}{1+0.519\Delta dep\left(\frac{rc-rb}{ra}\right)}+\frac{9.44\frac{\sqrt{Aeff\_1550/\pi}}{\lambda cc}+1.47}{1+0.365\Delta dep\ln\frac{rc}{ra}}\right] \quad \cdots \quad (45)$$

When $\lambda cc$ is 1.530 $\mu$m or less, a single-mode operation in the C-band can be ensured. When $\lambda cc$ is 1.460 $\mu$m or less, a single-mode operation in the S band can be ensured. On the other hand, when $\lambda cc$ is longer than 1.260 $\mu$m, the confinement of light in the core is enhanced, and it is possible to reduce the counter-propagation XT and the leakage loss. When $\lambda cc$ is longer than 1.360 $\mu$m, the confinement of light in the core is further enhanced, and the counter-propagation XT and the leakage loss can be further reduced.
$\Delta dep$ may be 0.5% or less. By reducing the absolute value of the difference in refractive index between the depressed layer 122 and the common cladding 120, it is possible to improve the manufacturability of the MCF preform. $\Delta dep$ may be 0.35% or less. The manufacturability of the MCF preform can be further improved. The most preferable range of $\Delta dep$ is 0.20% or less.
In the MCF cable capable of incorporating the MCF of the present disclosure, the upper limit value of the average bending radius of the incorporated MCF is preferably 0.60 m or less, and more preferably 0.30 m or less. This condition is effective for reducing the counter-propagation XT. The lower limit value of the average bending radius of the incorporated MCF is preferably 0.06 m or more, and more preferably 0.10 m or more. This condition is effective for reducing the bending fracture probability of the MCF in the cable.

The MCF cable capable of incorporating the MCF of the present disclosure may be a ribbon slot type cable. In this case, the bending radius of the MCF can be easily controlled, and the XT can be reduced.

The MCF cable capable of incorporating the MCF of the present disclosure may be a pliable ribbon-type cable. The pliable ribbon is a ribbon in which adjacent MCFs among a plurality of MCFs constituting the ribbon are bonded to each other at regular intervals along the longitudinal direction. In this case, the flexible pliable ribbon can be incorporated in the cable while being spirally twisted. That is, by forming the MCF into a cable while applying a small bending radius to the MCF, it is possible to effectively reduce the XT.

The characteristic quantities and properties of the MCF of the present disclosure can be measured by the following methods. The effective cross-sectional area Aeff_1550 can be measured by, for example, the method described in Appendix III of ITU-T G.650.2 (08/2015). The cable cutoff wavelength $\lambda$cc can be measured by, for example, a method described in section 6.3 of ITU-T G.650.1 (10/2020). The center-to-center distance A between cores each having adjacent relationship can be measured by, for example, a refraction near-field method, a lateral interference method, or a microscopic observation image of a MCF cross section (transmission near-field method). The shortest distance d_coat from the center of the core to the interface between the common cladding and the resin coating can be measured by, for example, a refraction near-field method, a lateral interference method, or a microscopic observation image of a MCF cross section (transmission near-field method). The minimum outer diameter CD of the common cladding can be measured by, for example, a refraction near-field method, a lateral interference method, or a microscopic observation image of a MCF cross section (transmission near-field method). The XT during parallel propagation can be measured by a method described in the Non-patent literature 3. The leakage loss can be measured by the method described in the Patent literature 3.

Although unit is omitted in the above formulas, in Formula (1) to (13), the coefficient of the constant of the term of Aeff_1550$^{1/2}$/$\lambda$cc of the numerator and the term of the constant are the unit of [$\mu$m]. That is, Formula (1) to Formula (13) are mathematical expressions when A, d_coat, and CD are represented by unit [$\mu$m].

REFERENCE SIGNS LIST

1A, 1B MCF cable
100, 100A, 100B, 100C, 100D, 100E MCF
110 core
110A inner peripheral core
110Ba lattice point arranged core
110Bb lattice point unarranged core
110a first core
110b second core
120 common cladding
121 optical cladding
122 depressed layer
130 resin coating
200, 200A, 200B, 200C, 200E glass fiber
210 outer periphery
300, 500 outer sheath
400A, 400B, 700 tension member
600 slotted core
800 square lattice
810 inner lattice point
820 outer lattice point
830 non-outer lattice point
AX central axis
LA symmetry axis

**Claims**

1. A multi-core optical fiber comprising:

12 or 16 core units each including a core extending along a central axis and a depressed layer covering an outer periphery of the core, the depressed layer having a refractive index lower than a maximum refractive index of the core;

a common cladding having a refractive index higher than the refractive index of the depressed layer and covering an outer periphery of each of the 12 or 16 core units; and

a resin coating covering an outer periphery of the common cladding,

wherein, on a cross section of the multi-core optical fiber orthogonal to the central axis, the 12 or 16 core units are arranged such that no adjacent relationship is established between cores each having an adjacent relationship with one specific core selected from the 12 or 16 core units, and are each arranged such that centers of the 12 or 16 core units are line symmetric with respect to an axis as a symmetry axis that intersects with the central axis and that passes through none of the centers of the 12 or 16 core units,

the resin coating has an outer diameter of 250±15 μm,

an effective cross-sectional area Aeff_1550 [μm$^2$] at a wavelength of 1.550 μm is 70 μm$^2$ or more,

a cable cutoff wavelength λcc [μm] at a length of 22 m is 1.530 μm or less, or 1.460 μm or less,

when a radius of the core is denoted as ra [μm], an inner radius of the depressed layer is denoted as rb [μm], an outer radius of the depressed layer is denoted as rc [μm], and an absolute value of a relative refractive index difference of the depressed layer with a refractive index of the common cladding used as a reference is denoted as Δdep [%], a center-to-center distance Λ [μm] between the cores each having the adjacent relationship satisfies a following Formula (1),

a shortest distance d_coat [μm] from a center of the core to an interface between the common cladding and the resin coating satisfies a following Formula (2),

in a configuration in which the common cladding surrounds an outer periphery of each of the 12 core units, a minimum outer diameter CD [μm] of the common cladding is 185 μm or less, 190 μm or less, or 195 μm or less, and further satisfies a following Formula (3), and

in a configuration in which the common cladding surrounds an outer periphery of each of the 16 core units, the minimum outer diameter CD [μm] of the common cladding is 195 μm or less, and further satisfies a following Formula (4).

[Math. 1]

$$\Lambda \geq \frac{6.51 \dfrac{\sqrt{Aeff\_1550/\pi}}{\lambda cc} + 14.2}{1 + 0.528 \Delta dep \left( \dfrac{rc - rb}{ra} \right)} \quad \cdots \quad (1)$$

[Math. 2]

$$d\_coat \geq \frac{7.35 \dfrac{\sqrt{Aeff\_1550/\pi}}{\lambda cc} + 4.60}{1 + 0.500 \Delta dep \ln \dfrac{rc}{ra}} \quad \cdots \quad (2)$$

[Math. 3]

$$CD \geq 2 \left[ \sqrt{1.5^2 + 0.5^2} \frac{6.51 \dfrac{\sqrt{Aeff/\pi}}{\lambda cc} + 14.2}{1 + 0.528 \Delta dep \left( \dfrac{rc - rb}{ra} \right)} + \frac{7.35 \dfrac{\sqrt{Aeff\_1550/\pi}}{\lambda cc} + 4.60}{1 + 0.500 \Delta dep \ln \dfrac{rc}{ra}} \right] \quad \cdots \quad (3)$$

[Math. 4]

$$CD \geq 2\left[1.5\sqrt{2}\,\frac{6.51\dfrac{\sqrt{Aeff/\pi}}{\lambda cc}+14.2}{1+0.528\Delta_{dep}\left(\dfrac{rc-rb}{ra}\right)}+\frac{7.35\dfrac{\sqrt{Aeff\_1550/\pi}}{\lambda cc}+4.60}{1+0.500\Delta dep\ln\dfrac{rc}{ra}}\right]\quad\cdots\quad(4)$$

2.  The multi-core optical fiber according to claim 1, wherein

    the center-to-center distance A satisfies a following Formula (5),
    the shortest distance d_coat [μm] satisfies a following Formula (6), and
    in the configuration in which the common cladding surrounds the outer periphery of each of the 12 core units, the
    minimum outer diameter CD [μm] of the common cladding satisfies a following Formula (7).
    [Math. 5]

$$\Lambda \geq \frac{7.27\dfrac{\sqrt{Aeff\_1550/\pi}}{\lambda cc}+14.4}{1+0.495\Delta dep\left(\dfrac{rc-rb}{ra}\right)}\quad\cdots\quad(5)$$

[Math. 6]

$$d\_coat \geq \frac{8.30\dfrac{\sqrt{Aeff\_1550/\pi}}{\lambda cc}+4.16}{1+0.400\Delta dep\ln\dfrac{rc}{ra}}\quad\cdots\quad(6)$$

[Math. 7]

$$CD \geq 2\left[\sqrt{1.5^2+0.5^2}\,\frac{7.27\dfrac{\sqrt{Aeff\_1550/\pi}}{\lambda cc}+14.4}{1+0.495\Delta dep\left(\dfrac{rc-rb}{ra}\right)}+\frac{8.30\dfrac{\sqrt{Aeff\_1550/\pi}}{\lambda cc}+4.16}{1+0.400\Delta dep\ln\dfrac{rc}{ra}}\right]\quad\cdots\quad(7)$$

3.  The multi-core optical fiber according to claim 1, wherein

    the center-to-center distance A [μm] satisfies a following Formula (8),
    the shortest distance d_coat [μm] satisfies a following Formula (9), and
    in the configuration in which the common cladding surrounds the outer periphery of each of the 12 core units, the
    minimum outer diameter CD [μm] of the common cladding satisfies a following Formula (10).
    [Math. 8]

$$\Lambda \geq \frac{6.97\dfrac{\sqrt{Aeff\_1550/\pi}}{\lambda cc}+14.5}{1+0.601\Delta dep\left(\dfrac{rc-rb}{ra}\right)}\quad\cdots\quad(8)$$

[Math. 9]

$$d\_coat \geq \frac{8.32\dfrac{\sqrt{Aeff\_1550/\pi}}{\lambda cc}+2.30}{1+0.471\Delta dep\ln\dfrac{rc}{ra}}\quad\cdots\quad(9)$$

[Math. 10]

$$CD \geq 2\left[\sqrt{1.5^2+0.5^2}\,\frac{6.97\dfrac{\sqrt{Aeff\_1550/\pi}}{\lambda cc}+14.5}{1+0.601\Delta dep\left(\dfrac{rc-rb}{ra}\right)}+\frac{8.32\dfrac{\sqrt{Aeff\_1550/\pi}}{\lambda cc}+2.30}{1+0.471\Delta dep\ln\dfrac{rc}{ra}}\right] \quad\cdots\;(10)$$

4. The multi-core optical fiber according to claim 1, wherein

the center-to-center distance A [μm] satisfies a following Formula (11),
the shortest distance d_coat [μm] satisfies a following Formula (12), and
in the configuration in which the common cladding surrounds the outer periphery of each of the 12 core units, the minimum outer diameter CD [μm] of the common cladding satisfies a following Formula (13).
[Math. 11]

$$\Lambda \geq \frac{7.99\dfrac{\sqrt{Aeff\_1550/\pi}}{\lambda cc}+13.7}{1+0.519\Delta dep\left(\dfrac{rc-rb}{ra}\right)} \quad\cdots\;(11)$$

[Math. 12]

$$d\_coat \geq \frac{9.44\dfrac{\sqrt{Aeff\_1550/\pi}}{\lambda cc}+1.47}{1+0.365\Delta dep\ln\dfrac{rc}{ra}} \quad\cdots\;(12)$$

[Math. 13]

$$CD \geq 2\left[\sqrt{1.5^2+0.5^2}\,\frac{7.99\dfrac{\sqrt{Aeff\_1550/\pi}}{\lambda cc}+13.7}{1+0.519\Delta dep\left(\dfrac{rc-rb}{ra}\right)}+\frac{9.44\dfrac{\sqrt{Aeff\_1550/\pi}}{\lambda cc}+1.47}{1+0.365\Delta dep\ln\dfrac{rc}{ra}}\right] \quad\cdots\;(13)$$

5. The multi-core optical fiber according to claim 1,
wherein the Δdep is 0.5% or less, or 0.35% or less.

6. A multi-core optical fiber cable comprising the multi-core optical fiber according to claim 1, wherein the multi-core optical fiber is incorporated with an average bending radius of 0.06 m to 0.6 m.

7. A multi-core optical fiber comprising:

12 or 16 cores each extending along a central axis;
a common cladding covering an outer periphery of each of the 12 or 16 cores; and
a resin coating covering an outer periphery of the common cladding,
wherein, on a cross section of the multi-core optical fiber orthogonal to the central axis, the 12 or 16 cores are arranged such that no adjacent relationship is established between cores each having an adjacent relationship with one specific core selected from the 12 or 16 cores, and are each arranged such that centers of the 12 or 16 cores are line symmetric with respect to an axis as a symmetry axis that intersects with the central axis and that passes through none of the centers of the 12 or 16 cores,
the resin coating has an outer diameter of 250±15 μm,
an effective cross-sectional area Aeff_1550 [μm$^2$] at a wavelength of 1.550 μm is 70 μm$^2$ or more,
a cable cutoff wavelength λcc [μm] at a length of 22 m is 1.530 μm or less, or 1.460 μm or less,
an outer diameter of the common cladding is 143 μm to 195 μm,
a center-to-center distance between cores each having the adjacent relationship is 28.5 μm to 40 μm,
a shortest distance from a center of each of the 12 or 16 cores to an interface between the common cladding and the resin coating is 26 μm to 35 μm,
a parallel propagation crosstalk between the cores each having the adjacent relationship at a wavelength of 1.565

$\mu$m is $10^{-3}$/km or less, and
a leakage loss from the common cladding to the resin coating at a wavelength of 1.565 $\mu$m is 0.01 dB/km or less.

8. A multi-core optical fiber cable comprising the multi-core optical fiber according to claim 7, wherein the multi-core optical fiber is incorporated with an average bending radius of 0.06 m to 0.6 m.

# Fig.1

CABLE STRUCTURE

STRUCTURE (A)

400A
1A
300
100
200
100
200
400B

STRUCTURE (B)

100
200
1B
100
200
600
700
500

**Fig.2**

CORE ARRANGEMENT

SQUARE LATTICE

ADJACENT RELATIONSHIP BETWEEN INNER PERIPHERAL CORE AND OUTER PERIPHERY CORE

**Fig.3**

**Fig.4**

# Fig.5

**Fig.6**

| TERMS |
|-------|

ADJACENT RELATIONSHIP OF INNER PERIPHERAL CORE

$\Lambda$

110A(110)     110A(110)

CORE CENTER

$\Lambda$

110A(110)

110A(110)

CROSS SECTION STRUCTURE AROUND CORE

121   122    120

110

r

CORE CENTER

PARALLEL PROPAGATION

110a    110a    110a

XT     XT

XT     XT

LIGHT   LIGHT   LIGHT

COUNTER-PROPAGATION

110a    110b   LIGHT

XT

110a

XT

LIGHT     LIGHT

30

**Fig.7**

| REFRACTIVE INDEX PROFILE | | | | |
|---|---|---|---|---|
| PATTERN(A) | PATTERN(B) | PATTERN(C) | PATTERN(D) | PATTERN(E) |
| PATTERN(F) | PATTERN(G) | PATTERN(H) | PATTERN(I) | PATTERN(J) |
| PATTERN(K) | | | | |

# Fig.8

NUMBER OF CORES

| | PARAME-TER | ra | rb | rc | Aeff_1.550 | λcc | Δcore | Δdep | Λ | | d_coat | θ | CD | XT @1.565μm | XT @1.625μm | LEAKAGE LOSS @1.565μm | LEAKAGE LOSS @1.625μm |
|---|---|---|---|---|---|---|---|---|---|---|---|---|---|---|---|---|---|
| | UNIT | μm | μm | μm | μm² | μm | % | % | μm | | μm | deg. | μm | 1/km | 1/km | dB/km | dB/km |
| EMBODIMENT | SAMPLE1 | 4.66 | 4.66 | 9.32 | 78 | 1.404 | 0.39 | 0.1 | 37 | 12 | 31.50 | 90 | 180.0 | $3.37\times10^{-04}$ | $1.30\times10^{-03}$ | 0.0036 | 0.0094 |
| | SAMPLE2 | 4.66 | 4.66 | 9.32 | 78 | 1.404 | 0.39 | 0.1 | 37 | 12 | 30.72 | 86 | 180.0 | $3.37\times10^{-04}$ | $1.30\times10^{-03}$ | 0.0065 | 0.0160 |
| | SAMPLE3 | 5.18 | 5.18 | 15.54 | 110 | 1.443 | 0.27 | 0.15 | 36 | 12 | 33.08 | 90 | 180.0 | $3.34\times10^{-04}$ | $1.09\times10^{-03}$ | 0.0017 | 0.0051 |
| | SAMPLE4 | 5.18 | 5.18 | 15.54 | 110 | 1.443 | 0.27 | 0.15 | 36 | 12 | 32.32 | 86 | 180.0 | $3.34\times10^{-04}$ | $1.09\times10^{-03}$ | 0.0026 | 0.0078 |
| | SAMPLE5 | 5.18 | 5.18 | 10.36 | 78 | 1.382 | 0.39 | 0.15 | 37 | 12 | 31.50 | 90 | 180.0 | $1.65\times10^{-04}$ | $6.51\times10^{-04}$ | 0.0023 | 0.0061 |
| | SAMPLE6 | 5.18 | 5.18 | 10.36 | 78 | 1.382 | 0.39 | 0.15 | 37 | 12 | 30.72 | 86 | 180.0 | $1.65\times10^{-04}$ | $6.51\times10^{-04}$ | 0.0042 | 0.0105 |
| | SAMPLE7 | 5.07 | 7.68 | 15.09 | 80 | 1.5 | 0.36 | 0.45 | 35 | 12 | 34.66 | 90 | 180.0 | $6.51\times10^{-07}$ | $2.72\times10^{-06}$ | ≦0.0005 | ≦0.0005 |
| | SAMPLE8 | 5.07 | 7.68 | 15.09 | 80 | 1.5 | 0.36 | 0.45 | 35 | 12 | 33.92 | 86 | 180.0 | $6.51\times10^{-07}$ | $2.72\times10^{-06}$ | ≦0.0005 | ≦0.0005 |
| | SAMPLE9 | 4.92 | 4.92 | 9.84 | 78 | 1.504 | 0.42 | 0.15 | 38 | 12 | 32.42 | 90 | 185.0 | $1.81\times10^{-05}$ | $7.65\times10^{-05}$ | 0.0003 | 0.0008 |
| | SAMPLE10 | 5.23 | 5.23 | 10.46 | 78 | 1.485 | 0.42 | 0.2 | 32.8 | 16 | 27.92 | 90 | 195.0 | $8.68\times10^{-04}$ | $2.97\times10^{-03}$ | 0.0071 | 0.0151 |
| | SAMPLE11 | 4.66 | 4.66 | 13.98 | 78 | 1.378 | 0.36 | 0.2 | 32 | 16 | 29.62 | 90 | 195.0 | $5.37\times10^{-04}$ | $1.84\times10^{-03}$ | 0.0045 | 0.0114 |
| | SAMPLE12 | 5.07 | 7.68 | 15.09 | 80 | 1.5 | 0.36 | 0.45 | 34 | 16 | 25.38 | 90 | 195.0 | $1.27\times10^{-06}$ | $5.09\times10^{-06}$ | ≦0.0005 | ≦0.001 |
| COMPARATIVE EXAMPLE | SAMPLE1 | 5.25 | 5.25 | 5.25 | 78 | 1.212 | 0.36 | 0 | 41.0 | 12 | 34.82 | 90 | 199.2 | $1.00\times10^{-03}$ | $>1.00\times10^{-03}$ | 0.01 | >0.01 |
| | SAMPLE2 | 4.66 | 4.66 | 9.32 | 110 | 1.356 | 0.27 | 0.1 | 40.5 | 12 | 35.45 | 90 | 198.9 | $1.00\times10^{-03}$ | $>1.00\times10^{-03}$ | 0.01 | >0.01 |
| | SAMPLE3 | 4.66 | 4.66 | 9.32 | 110 | 1.356 | 0.27 | 0.1 | 40.5 | 12 | 35.45 | 90 | 198.9 | $1.00\times10^{-03}$ | $>1.00\times10^{-03}$ | 0.01 | >0.01 |
| | SAMPLE4 | 5.18 | 5.18 | 10.36 | 78 | 1.382 | 0.39 | 0.15 | 37 | 16 | 31.50 | 90 | 220.0 | $1.65\times10^{-04}$ | $6.51\times10^{-04}$ | 0.0023 | 0.0061 |
| | SAMPLE5 | 5.07 | 7.68 | 15.09 | 80 | 1.5 | 0.36 | 0.45 | 35 | 16 | 34.66 | 90 | 217.8 | $6.51\times10^{-07}$ | $2.72\times10^{-06}$ | ≦0.0005 | ≦0.0005 |

EP 4 664 166 A1

## INTERNATIONAL SEARCH REPORT

| | International application No. |
|---|---|
| | **PCT/JP2024/000504** |

**A. CLASSIFICATION OF SUBJECT MATTER**

*G02B 6/02*(2006.01)i; *G02B 6/44*(2006.01)i
FI: G02B6/02 461; G02B6/44 366

According to International Patent Classification (IPC) or to both national classification and IPC

**B. FIELDS SEARCHED**

Minimum documentation searched (classification system followed by classification symbols)

G02B6/02-6/10; G02B6/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-063072 A (SUMITOMO ELECTRIC INDUSTRIES, LTD.) 21 April 2022 (2022-04-21)<br>paragraphs [0013]-[0081], [0123]-[0127], fig. 1-8 | 1-8 |
| Y | US 2019/0243063 A1 (CORNING INC.) 08 August 2019 (2019-08-08)<br>paragraphs [0042]-[00167], fig. 1-4 | 1-8 |
| A | JP 2022-041625 A (SUMITOMO ELECTRIC INDUSTRIES, LTD.) 11 March 2022 (2022-03-11)<br>entire text, all drawings | 1-8 |
| A | WO 2015/133407 A1 (FUJIKURA LTD.) 11 September 2015 (2015-09-11)<br>entire text, all drawings | 1-8 |
| A | WO 2016/175209 A1 (FUJIKURA LTD.) 03 November 2016 (2016-11-03)<br>entire text, all drawings | 1-8 |

☑ Further documents are listed in the continuation of Box C.       ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2024/000504** |

**C.      DOCUMENTS CONSIDERED TO BE RELEVANT**

| Category* | Citation of document, with indication, where appropriate, of the relevant passages | Relevant to claim No. |
|---|---|---|
| A | WO 2018/168170 A1 (FUJIKURA LTD.) 20 September 2018 (2018-09-20)<br>entire text, all drawings | 1-8 |
| A | WO 2020/105470 A1 (NIPPON TELEGRAPH AND TELEPHONE CORPORATION) 28 May 2020 (2020-05-28)<br>entire text, all drawings | 1-8 |
| A | US 2021/0181408 A1 (CORNING INC.) 17 June 2021 (2021-06-17)<br>entire text, all drawings | 1-8 |

Form PCT/ISA/210 (second sheet) (July 2022)

## INTERNATIONAL SEARCH REPORT
### Information on patent family members

International application No.

**PCT/JP2024/000504**

| Patent document cited in search report | | | Publication date (day/month/year) | Patent family member(s) | | | Publication date (day/month/year) |
|---|---|---|---|---|---|---|---|
| JP | 2022-063072 | A | 21 April 2022 | US | 2022/0113467 | A1 | |
| | | | | paragraphs [0027]-[0115], [0171]-[0176], fig. 1-8 | | | |
| | | | | EP | 3982176 | A1 | |
| | | | | CN | 114325925 | A | |
| US | 2019/0243063 | A1 | 08 August 2019 | WO | 2019/152739 | A1 | |
| JP | 2022-041625 | A | 11 March 2022 | US | 2022/0066091 | A1 | |
| | | | | entire text, all drawings | | | |
| | | | | EP | 3961275 | A1 | |
| | | | | CN | 114114521 | A | |
| WO | 2015/133407 | A1 | 11 September 2015 | US | 2016/0187576 | A1 | |
| | | | | entire text, all drawings | | | |
| | | | | EP | 3029498 | A1 | |
| WO | 2016/175209 | A1 | 03 November 2016 | US | 2018/0120501 | A1 | |
| | | | | entire text, all drawings | | | |
| | | | | EP | 3290970 | A1 | |
| | | | | CN | 107111053 | A | |
| | | | | JP | 2016-212157 | A | |
| WO | 2018/168170 | A1 | 20 September 2018 | JP | 2018-155972 | A | |
| WO | 2020/105470 | A1 | 28 May 2020 | US | 2022/0003920 | A1 | |
| | | | | entire text, all drawings | | | |
| | | | | EP | 3885804 | A1 | |
| | | | | CN | 112969941 | A | |
| | | | | JP | 6560806 | B1 | |
| US | 2021/0181408 | A1 | 17 June 2021 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023017438 A
- JP 2022041625 A
- JP 2015163972 A
- JP 2017509171 A

**Non-patent literature cited in the description**

- **YUSUKE SASAKI et al.** High Density Multicore Fibers Employing Small MFD Cores for Datacenters. *OECC2018, Technical Digest, P2-07, July 02-06, 2018, Jeju, Korea*
- **R. J. BLACK ; C. PASK**. J. Opt. Soc. Am. A. *JOSAA*, 1984, vol. 1 (11), 1129-1131
- **Y. KOBAYASHI ; T. HAYASHI**. Behavior and measurement method of inter-core crosstalk in multicore fibers with core-dependent loss. *Opt. Express*, 2023, vol. 31 (1), 502-508